# EUROPEAN PATENT APPLICATION

(11) **EP 4 615 085 A1**
(43) Date of publication of application: **10.09.2025**
(21) Application number: 23887950.6
(22) Date of filing: 06.11.2023
(51) Int. Cl.: H04W 72/02

(54) **METHOD FOR RESOURCE SELECTION, COMMUNICATION APPARATUS, AND COMMUNICATION SYSTEM**

(30) Priority: 09.11.2022 CN 202211401006
(71) Applicant: Huawei Technologies Co., Ltd., Shenzhen, Guangdong 518129 (CN)
(72) Inventor: WU, Hao, Shenzhen, Guangdong 518129 (CN); PENG, Wenjie, Shenzhen, Guangdong 518129 (CN)
(74) Representative: Körber, Martin Hans
(86) International application number: PCT/CN2023/129902
(87) International publication number: WO 2024/099260

(57) **Abstract**

Embodiments of this application provide a resource selection method, a communication apparatus, and a communication system. The method includes: A first terminal device determines to transmit data in multiple processes to a second terminal device in multiple consecutive time units of an unlicensed spectrum, where the second terminal device communicates with the first terminal device through a sidelink, and the multiple processes are in one-to-one correspondence with multiple parameter groups. The first terminal device determines a target parameter group based on first information included in the multiple parameter groups, where the target parameter group is used to determine resource locations of the multiple consecutive time units, and the first information includes one or more of a priority, a quantity of subchannels, a remaining packet delay budget, and a resource reservation period. In the foregoing technical solution, a group of parameters can be determined for multiple processes, and the group of parameters may be used by a terminal device to select an appropriate candidate resource set for the multiple processes, to implement continuous data transmission.

## Description

This application claims priority to Chinese Patent Application No. 202211401006.0, filed with the China National Intellectual Property Administration on November 9, 2022 and entitled "RESOURCE SELECTION METHOD, COMMUNICATION APPARATUS, AND COMMUNICATION SYSTEM", which is incorporated herein by reference in its entirety.

### TECHNICAL FIELD

Embodiments of this application relate to the field of wireless communication technologies, and more specifically, to a resource selection method, a communication apparatus, and a communication system.

### BACKGROUND

A sidelink (sidelink, SL) is a link technology introduced to support direct communication between terminal devices.

In the new radio (new radio, NR) release 18 (release 18, R18), to support transmission of a higher-rate service (for example, a virtual reality (virtual reality) service), a spectrum used for sidelink (sidelink, SL) communication is extended from a licensed spectrum to an unlicensed spectrum with a large bandwidth. This communication technology is a sidelink-unlicensed (sidelink-unlicensed, SL-U) communication technology.

The SL-U technology supports multi-consecutive slots transmission (multi-consecutive slots transmission, MCSt), that is, continuous data is transmitted in consecutive slots. However, how a terminal device selects a resource for multi-consecutive slots transmission is an urgent problem to be resolved.

### SUMMARY

Embodiments of this application provide a resource selection method, a communication apparatus, and a communication system, so that a group of parameters can be determined for multiple processes, and the group of parameters may be used by a terminal device to select an appropriate candidate resource set for the multiple processes, to implement continuous data transmission.

According to a first aspect, a resource selection method is provided. The method includes: A first terminal device determines to transmit data in multiple processes to a second terminal device in multiple consecutive time units of an unlicensed spectrum, where the second terminal device communicates with the first terminal device through a sidelink, and the multiple processes are in one-to-one correspondence with multiple parameter groups. The first terminal device determines a target parameter group based on first information included in the multiple parameter groups, where the target parameter group is used to determine resource locations of the multiple consecutive time units, and the first information includes one or more of a priority, a quantity of subchannels, a remaining packet delay budget, and a resource reservation period.

In the solution provided in this application, the first terminal device may determine the target parameter group for the multiple processes based on the first information. The target parameter group may be used to determine the resource locations of the multiple consecutive time units, so that continuous data can be transmitted in the multiple consecutive time units in, for example, an SL-U scenario. In addition, because the first terminal device transmits the data in the multiple consecutive time units, a type1 listen-before-talk process can be reduced, an access success probability can be increased, and transmission efficiency can be improved.

In a possible implementation, that the first terminal device determines a target parameter group based on first information included in the multiple parameter groups includes: The first terminal device determines the target parameter group based on a first parameter in the first information, where the first parameter is one of the priority, the quantity of subchannels, the remaining packet delay budget, and the resource reservation period.

When importance of data is mainly considered, the first parameter may be the priority. When a sending delay of data is mainly considered, the first parameter may be the remaining packet delay budget. When a sending amount of data is mainly considered, the first parameter may be the quantity of subchannels. When a periodic transmission resource of periodic data needs to be ensured, the first parameter may be the resource reservation period.

In a possible implementation, that the first terminal device determines the target parameter group based on a first parameter in the first information includes: The first terminal device determines, based on a value of the first parameter, that a first parameter group in the multiple parameter groups is the target parameter group, where a value of the first parameter in the first parameter group meets a first preset condition.

The first terminal device may directly select one parameter group from the multiple parameter groups as the target parameter group, so that a parameter that meets a data transmission requirement of the multiple processes can be quickly found at low costs. This is simple and efficient.

In a possible implementation, the first preset condition includes: The value of the first parameter in the first parameter group is greater than or less than a value of the first parameter in a parameter group other than the first parameter group in the multiple parameter groups, or is closest to an average value of the first parameters in the multiple parameter groups.

In this way, the target parameter group can be quickly selected from the multiple parameter groups based on the value of the first parameter.

In a possible implementation, that the first terminal device determines, based on a value of the first parameter, that a first parameter group in the multiple parameter groups is the target parameter group includes: The first terminal device determines a target first parameter based on values of the first parameters included in the multiple parameter groups, where a value of the target first parameter is a largest value or a smallest value in the first parameters included in the multiple parameter groups, or is closest to the average value of the first parameters included in the multiple parameter groups, and the target first parameter corresponds to the first parameter group. The first terminal device determines the first parameter group corresponding to the target first parameter as the target parameter group.

In a possible implementation, each of the multiple parameter groups includes the first parameter, and types of parameters included in any two of the multiple parameter groups are the same.

When the types of the parameters included in the any two of the multiple parameter groups are the same, a type of a parameter included in the target parameter group selected from the multiple parameter groups is the same as a type of a parameter included in each of the multiple parameter groups, so that a candidate resource set that is appropriate for the multiple processes is determined based on the target parameter group.

In a possible implementation, a part of the multiple parameter groups include the first parameter, and the first parameter is the resource reservation period.

When the part of the multiple parameter groups include the resource reservation period, the target parameter group may be directly determined based on the resource reservation period. In this way, the determined target parameter group includes the resource reservation period. In this way, a selected period parameter (that is, the resource reservation period) facilitates finding a periodic resource for periodic data, and another parameter may be used to determine a resource for aperiodic data.

In a possible implementation, that the first terminal device determines the target parameter group based on a first parameter in the first information includes: The first terminal device determines the target parameter group based on the first parameter and a second parameter in the first information, where the second parameter is one of the priority, the quantity of subchannels, the remaining packet delay budget, and the resource reservation period, and the first parameter is different from the second parameter.

The first terminal device may determine an appropriate group of parameters for the multiple processes with reference to multiple parameters.

In a possible implementation, that the first terminal device determines the target parameter group based on the first parameter and a second parameter in the first information includes: The first terminal device determines multiple candidate parameter groups from the multiple parameter groups based on the first parameter. The first terminal device selects the target parameter group from the multiple candidate parameter groups based on the second parameter.

The first terminal device may narrow a selection range of the target parameter group based on the first parameter and the second parameter, to further determine an available target parameter group.

In a possible implementation, a value of the first parameter in each of the multiple candidate parameter groups meets a second preset condition, and a value of the second parameter in the target parameter group meets a third preset condition.

The second preset condition includes: The value of the first parameter in each of the multiple candidate parameter groups is greater than or less than a value of the first parameter in a parameter group other than the multiple candidate parameter groups in the multiple parameter groups, or is closest to an average value of the first parameters in the multiple parameter groups.

The third preset condition includes: The value of the second parameter in the target parameter group is greater than or less than a value of the second parameter in a parameter group other than the target parameter group in the multiple candidate parameter groups, or is closest to an average value of the second parameters in the multiple candidate parameter groups.

In this way, the target parameter group can be quickly selected from the multiple parameter groups based on the value of the first parameter and the value of the second parameter.

In a possible implementation, values of the first parameters in all of the multiple candidate parameter groups are equal.

In a possible implementation, each of the multiple parameter groups includes the first parameter and the second parameter, and types of parameters included in any two of the multiple parameter groups are the same.

When the types of the parameters included in the any two of the multiple parameter groups are the same, types of parameters included in the target parameter group selected from the multiple parameter groups are the same as types of parameters included in each of the multiple parameter groups, so that a candidate resource set that is appropriate for the multiple processes is determined based on the target parameter group.

In a possible implementation, the first parameter or the second parameter is the resource reservation period.

When a part of the multiple parameter groups include the resource reservation period, the first terminal device uses the resource reservation period as a selection criterion, to ensure that the target parameter group that is finally determined includes the resource reservation period, thereby ensuring a periodic resource requirement of the periodic data.

In a possible implementation, the first parameter is one of the priority and the remaining packet delay budget, and the second parameter is the other of the priority and the remaining packet delay budget.

The priority and the remaining packet delay budget have great impact on a process of determining the candidate resource set. Therefore, the first terminal device determines the target parameter group in consideration of the two parameters, so that the candidate resource set determined based on the target parameter group can better adapt to the multiple processes, to meet a transmission requirement of data in all processes.

In a possible implementation, each of the multiple parameter groups includes the first parameter, a part of the multiple parameter groups include the second parameter, and that the first terminal device determines the target parameter group based on the first parameter and a second parameter in the first information includes: The first terminal device determines a first parameter group from the multiple parameter groups based on the first parameter, where a value of the first parameter in the first parameter group meets a fourth preset condition, and the first parameter group does not include the second parameter. The first terminal device determines a target second parameter from the part of parameter groups based on the second parameter, where a value of the target second parameter meets a fifth preset condition. The first terminal device determines the target parameter group based on the first parameter group and the target second parameter.

When types of parameters included in a part of the multiple parameter groups are more than types of parameters included in the other part of parameter groups, when determining the target parameter group, the first terminal device may determine, in a manner of group selection and value evaluation, values of all parameters included in the target parameter group, so that an appropriate resource set can be selected based on different data requirements.

In a possible implementation, the target parameter group includes all parameters included in a second parameter group, values corresponding to all the parameters, the target second parameter, and the value corresponding to the target second parameter.

In a possible implementation, the fourth preset condition includes: The value of the first parameter in the first parameter group is greater than or less than a value of the first parameter in a parameter group other than the first parameter group in the multiple parameter groups, or is closest to an average value of the first parameters in the multiple parameter groups.

The fifth preset condition includes: The value of the target second parameter is a largest value or a smallest value in the second parameters included in the part of parameter groups or an average value of the second parameters included in the part of parameter groups, or is closest to an average value of the second parameters included in the part of parameter groups.

In a possible implementation, the first parameter is one of the priority, the quantity of subchannels, and the remaining packet delay budget, and the second parameter is the resource reservation period.

In a possible implementation, the target parameter group includes the first parameter, and that the first terminal device determines the target parameter group based on a first parameter in the first information includes: The first terminal device determines a value of the first parameter in the target parameter group based on values of the first parameters in the multiple parameter groups.

In this solution, the first terminal device may separately consider a value of each parameter in the target parameter group at a granularity of a parameter. In this way, data transmission requirements of the data in the multiple processes may be comprehensively considered, to determine the target parameter group that meets the requirements of the multiple processes.

In a possible implementation, the value of the first parameter in the target parameter group is the value of the first parameter in the first parameter group in the multiple parameter groups.

The value of the first parameter in the target parameter group may be directly a value in the first parameters included in the multiple parameter groups, so that a highest or lowest requirement of different processes on the parameter is met for selection, and accuracy of resource set selection is improved.

In a possible implementation, the value of the first parameter in the first parameter group is a largest value or a smallest value in the first parameters in the multiple parameter groups, or is closest to an average value of the first parameters in a part or all of the multiple parameter groups.

A value of each parameter in the target parameter group meets an average value, an upper limit, or a lower limit for a type of the parameter. The target parameter group selected in this manner may meet a common requirement of multiple different processes (process data) for resource set selection.

In a possible implementation, the value of the first parameter in the target parameter group is an average value of the first parameters in one or more parameter groups in the multiple parameter groups.

The value of the first parameter in the target parameter group may be the average value of the first parameters included in the multiple parameter groups, so that a common requirement of different processes on the parameter is met for selection, and accuracy of resource set selection is improved.

In a possible implementation, before the first terminal device determines to transmit the data in the multiple processes to the second terminal device in the multiple consecutive time units of the unlicensed spectrum, the method further includes: The first terminal device determines the multiple processes based on the resource reservation period, where data in a process corresponding to a parameter group including the resource reservation period is periodic data, and data in a process corresponding to a parameter group not including the resource reservation period is aperiodic data.

Before determining the target parameter group for the multiple processes, the first terminal device may first classify the target parameter group, so that types of parameters included in parameter groups corresponding to classified processes are the same, to facilitate calculation or selection of the target parameter group.

In a possible implementation, a parameter group corresponding to each of the multiple processes includes the resource reservation period; or a parameter group corresponding to each of the multiple processes does not include the resource reservation period.

In this way, multiple processes belong to a same type, and complexity of selecting the target parameter group can be simplified.

In a possible implementation, before the first terminal device determines to transmit the data in the multiple processes to the second terminal device in the multiple consecutive time units of the unlicensed spectrum, the method further includes: The first terminal device determines the multiple processes based on the remaining packet delay budget.

Before determining the target parameter group for the multiple processes, the first terminal device may first classify the target parameter group, so that a remaining packet delay budget of a classified process is within a specific range, and a candidate resource set corresponding to the multiple processes can be expanded, so that there are more selectable solutions for the multiple consecutive time units subsequently.

In a possible implementation, an absolute value of a difference between the remaining packet delay budget of a first process in the multiple processes and the remaining packet delay budget of each of other processes than the first process in the multiple processes is less than or equal to a first threshold.

Remaining packet delay budgets of the multiple processes are within a same range, so that a resource selection window obtained based on the remaining packet delay budget is more accurate.

In a possible implementation, the first threshold is configured by a network device for the first terminal device, or the first threshold is preconfigured for the first terminal device.

In a possible implementation, the first threshold is carried in a radio resource control RRC message or system message broadcast.

In a possible implementation, the first terminal device includes a physical layer and a medium access control layer, and that the first terminal device determines a target parameter group based on first information included in the multiple parameter groups includes: The medium access control layer determines the target parameter group based on the first information; and the method further includes: The medium access control layer sends the target parameter group to the physical layer, where the target parameter group is used by the physical layer to obtain a candidate resource set, and the candidate resource set is used to determine the resource locations of the multiple consecutive time units.

The medium access control layer determines the target parameter group, so that a quantity of parameters sent to the physical layer can be reduced, and the physical layer quickly finds the candidate resource set.

In a possible implementation, the method further includes: The medium access control layer sends target channel access priority class information corresponding to the target parameter group to the physical layer, where the target channel access priority class information is used by the physical layer to perform listen-before-talk LBT.

The target channel access priority class information sent by the medium access control layer to the physical layer is used by the physical layer to perform LBT as early as possible, to access a channel.

In a possible implementation, the first terminal device includes a physical layer and a medium access control layer, and that the first terminal device determines a target parameter group based on first information included in the multiple parameter groups includes: The medium access control layer sends the multiple parameter groups to the physical layer. The physical layer determines the target parameter group based on the first information included in the multiple parameter groups, where the target parameter group is used by the physical layer to obtain a candidate resource set, and the candidate resource set is used to determine the resource locations of the multiple consecutive time units.

When the physical layer determines the target parameter group, a small change is made to the MAC layer, which facilitates implementation.

In a possible implementation, the method further includes: The medium access control layer sends channel access priority class information corresponding to each of the multiple processes to the physical layer, where the channel access priority class information corresponding to each of the multiple processes is used to determine target channel access priority class information corresponding to the target parameter group, and the target channel access priority class information is used by the physical layer to perform listen-before-talk LBT.

The channel access priority class information that is corresponding to each process and that is sent by the medium access control layer to the physical layer is used to determine the target channel access priority class information, and the target channel access priority class information is used by the physical layer to perform LBT as early as possible, to access a channel.

In a possible implementation, the target channel access priority class information includes channel access priority class information corresponding to a process with a highest channel access priority class in the multiple processes or channel access priority class information corresponding to a process with a lowest channel access priority class in the multiple processes.

When the target channel access priority class information includes the channel access priority class information corresponding to the process with the highest channel access priority class in the multiple processes, it is easier for the first terminal device to access the channel. When the target channel access priority class information includes the channel access priority class information corresponding to the process with the lowest channel access priority class in the multiple processes, channel access fairness is ensured, and channel collision is reduced.

In a possible implementation, the method further includes: The medium access control layer sends an identifier of each of the multiple processes to the physical layer, where there is a correspondence between the identifier of each of the multiple processes and the target parameter group.

The correspondence between the identifier of the process and the target parameter group may be used to determine specific time units in which the data in the multiple processes is transmitted.

In a possible implementation, the method further includes: The first terminal device obtains the candidate resource set based on the target parameter group, where the candidate resource set includes an available resource used by the first terminal device to transmit the data in the multiple processes. The first terminal device determines the resource locations of the multiple consecutive time units based on the candidate resource set.

In a possible implementation, a part of the multiple consecutive time units are used to transmit the data in the multiple processes, and a rest of the multiple consecutive time units are used to transmit data of a terminal device other than the first terminal device and/or a sidelink synchronization signal block corresponding to the first terminal device.

The data in the multiple processes of the first terminal device may occupy the multiple consecutive time units together with the data of the terminal device other than the first terminal device and/or the sidelink synchronization signal block corresponding to the first terminal device, so that a sending success rate of the data in the multiple processes can be improved.

In a possible implementation, that the first terminal device determines the resource locations of the multiple consecutive time units based on the candidate resource set includes: The first terminal device determines the resource locations of the multiple consecutive time units based on a reserved resource location and the candidate resource set, where the reserved resource location is used to transmit data of a terminal device other than the first terminal device and/or a sidelink synchronization signal block corresponding to the first terminal device.

In a possible implementation, the first terminal device includes the physical layer and the medium access control layer, and that the first terminal device determines the resource locations of the multiple consecutive time units based on a reserved resource location and the candidate resource set includes: The physical layer sends the reserved resource location and the candidate resource set to the medium access control layer. The medium access control layer determines the resource locations of the multiple consecutive time units based on the reserved resource location and the candidate resource set.

The medium access control layer determines the resource locations of the multiple consecutive time units, and a small change is made to a protocol, which facilitates implementation.

In a possible implementation, the method further includes: The physical layer sends channel access priority class information corresponding to the reserved resource location to the medium access control layer.

In this way, the first terminal device determines a channel access priority class of another time unit other than the reserved resource location in the multiple consecutive time units.

In a possible implementation, the first terminal device includes the physical layer and the medium access control layer, and that the first terminal device determines the resource locations of the multiple consecutive time units based on a reserved resource location and the candidate resource set includes: The physical layer determines the resource locations of the multiple consecutive time units based on the reserved resource location and the candidate resource set. The physical layer sends the reserved resource location and the resource locations of the multiple consecutive time units to the medium access control layer, or sends first indication information to the medium access control layer, where the first indication information indicates a resource location of a time unit occupied by the medium access control layer to transmit the data in the multiple processes.

The physical layer determines the resource locations of the multiple consecutive time units, and may quickly determine consecutive time unit resources with reference to another reserved resource.

In a possible implementation, the method further includes: The physical layer sends second indication information to the medium access control layer, where the second indication information indicates a correspondence between the multiple processes and the time unit used to transmit the data in the multiple processes in the multiple consecutive time units.

The physical layer determines the correspondence between the multiple processes and the time unit used to transmit the data in the multiple processes, so that an operation of the medium access control layer can be simplified, and the medium access control layer may directly send data in a process based on an indication of the physical layer.

In a possible implementation, a channel access priority class corresponding to each of the multiple processes is not lower than a channel access priority class corresponding to the reserved resource location.

In a possible implementation, the first terminal device includes the physical layer and the medium access control layer, and that the first terminal device determines the resource locations of the multiple consecutive time units based on the candidate resource set includes: The physical layer determines the resource locations of the multiple consecutive time units based on the candidate resource set, where the multiple consecutive time units are used for initial transmission and/or retransmission of the data in the multiple processes. The physical layer sends the resource locations of the multiple consecutive time units and at least one of the identifier of each of the multiple processes and third indication information to the medium access control layer, where the third indication information indicates a correspondence between the multiple consecutive time units and the data in the multiple processes.

According to a second aspect, a resource selection method is provided. The method includes: A first terminal device determines to transmit data in multiple processes to a second terminal device in multiple consecutive time units of an unlicensed spectrum, where the second terminal device communicates with the first terminal device through a sidelink, and the multiple processes are in one-to-one correspondence with multiple parameter groups. The first terminal device determines a target parameter group based on the multiple parameter groups. The first terminal device obtains a reserved resource location and a candidate resource set based on the target parameter group, where the reserved resource location is used to transmit data of a terminal device other than the first terminal device and/or a sidelink synchronization signal block corresponding to the first terminal device, and the candidate resource set includes an available resource used by the first terminal device to transmit the data in the multiple processes. The first terminal device determines resource locations of the multiple consecutive time units based on the reserved resource location and the candidate resource set, where a part of the multiple consecutive time units are used to transmit the data in the multiple processes, and a rest of the multiple consecutive time units are used to transmit the data of the terminal device other than the first terminal device and/or the sidelink synchronization signal block corresponding to the first terminal device.

In the solution provided in this application, the first terminal device may determine the resource locations of the multiple consecutive time units based on the reserved resource location and the candidate resource set, so that continuous data can be transmitted in the multiple consecutive time units in an SL-U scenario. In addition, the data in the multiple processes of the first terminal device may occupy the multiple consecutive time units together with the data of the terminal device other than the first terminal device and/or the sidelink synchronization signal block corresponding to the first terminal device. In this way, more resources are used to select the multiple consecutive time units, and a sending success rate of the data in the multiple processes can be improved.

In a possible implementation, the first terminal device includes a physical layer and a medium access control layer, and that the first terminal device determines resource locations of the multiple consecutive time units based on the reserved resource location and the candidate resource set includes: The physical layer sends the reserved resource location and the candidate resource set to the medium access control layer. The medium access control layer determines the resource locations of the multiple consecutive time units based on the reserved resource location and the candidate resource set.

In a possible implementation, the method further includes: The physical layer sends channel access priority class information corresponding to the reserved resource location to the medium access control layer.

In a possible implementation, the first terminal device includes a physical layer and a medium access control layer, and that the first terminal device determines resource locations of the multiple consecutive time units based on the reserved resource location and the candidate resource set includes: The physical layer determines the resource locations of the multiple consecutive time units based on the reserved resource location and the candidate resource set. The physical layer sends the reserved resource location and the resource locations of the multiple consecutive time units to the medium access control layer, or sends first indication information to the medium access control layer, where the first indication information indicates a resource location of a time unit occupied by the medium access control layer to transmit the data in the multiple processes.

In a possible implementation, the method further includes: The physical layer sends second indication information to the medium access control layer, where the second indication information indicates a correspondence between the multiple processes and the time unit used to transmit the data in the multiple processes in the multiple consecutive time units.

In a possible implementation, a channel access priority class corresponding to each of the multiple processes is not lower than a channel access priority class corresponding to the reserved resource location.

In a possible implementation, data of each of the multiple processes is periodic data; or data of each of the multiple processes is aperiodic data.

In a possible implementation, before the first terminal device determines to transmit the data in the multiple processes to the second terminal device in the multiple consecutive time units of the unlicensed spectrum, the method further includes: The first terminal device determines the multiple processes based on a remaining packet delay budget.

In a possible implementation, an absolute value of a difference between a remaining packet delay budget of a first process in the multiple processes and a remaining packet delay budget of each of other processes than the first process in the multiple processes is less than or equal to a first threshold.

In a possible implementation, the first threshold is configured by a network device for the first terminal device, or the first threshold is preconfigured for the first terminal device.

In a possible implementation, the first threshold is carried in a radio resource control RRC message or system message broadcast.

According to a third aspect, a communication apparatus is provided. The apparatus is configured to perform the method in any one of the possible implementations of the first aspect and the second aspect. Specifically, the apparatus may include a unit and/or a module configured to perform the method in any one of the possible implementations of the first aspect and the second aspect, for example, a processing unit and/or a communication unit.

In an implementation, the apparatus is a terminal device (such as a first terminal device). When the apparatus is a terminal device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a terminal device (such as a first terminal device). When the apparatus is a chip, a chip system, or a circuit used in a terminal device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a fourth aspect, a communication apparatus is provided. The apparatus includes at least one processor, configured to execute a computer program or instructions stored in a memory, to perform the method in any one of the possible implementations of the first aspect and the second aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a terminal device (such as a first terminal device).

In another implementation, the apparatus is a chip, a chip system, or a circuit used in a terminal device (such as a first terminal device).

According to a fifth aspect, this application provides a processor, configured to perform the methods provided in the first aspect and the second aspect.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a sixth aspect, a computer-readable storage medium is provided. The computer-readable medium stores program code to be executed by a device, and the program code is used to perform the method in any one of the possible implementations of the first aspect and the second aspect.

According to a seventh aspect, a computer program product including instructions is provided. When the computer program product runs on a computer, the computer is enabled to perform the method in any one of the possible implementations of the first aspect and the second aspect.

According to an eighth aspect, a chip is provided. The chip includes a processor and a communication interface. The processor reads, through the communication interface, instructions stored in a memory, to perform the method provided in any one of the implementations of the first aspect and the second aspect.

Optionally, in an implementation, the chip further includes the memory. The memory stores a computer program or instructions. The processor is configured to execute the computer program or the instructions stored in the memory. When the computer program or the instructions are executed, the processor is configured to perform the method provided in any one of the implementations of the first aspect and the second aspect.

According to a ninth aspect, a chip is provided. The chip includes a logic circuit and a communication interface. The communication interface is configured to receive to-be-processed data and/or information, and transmit the to-be-processed data and/or information to the logic circuit. The logic circuit is configured to perform encoding processing provided in any one of the implementations of the first aspect and the second aspect, and the communication interface is further configured to output an encoded polar codeword.

According to a tenth aspect, a communication system is provided, including the first terminal device and the second terminal device described above.

For beneficial effects of the apparatuses in the third aspect to the tenth aspect, refer to beneficial effects of the methods described in the first aspect and the second aspect. Details are not described herein again.

### BRIEF DESCRIPTION OF DRAWINGS

FIG. 1 is a diagram of a communication system to which embodiments of this application are applicable;
FIG. 2 is a diagram in which a terminal device performs resource sensing and resource selection in an autonomous contention mode;
FIG. 3 is a diagram in which a terminal device performs a listen-before-talk process;
FIG. 4 is a diagram of sending continuous data within a channel occupancy time;
FIG. 5 is a schematic flowchart in which a terminal device performs SL resource grant;
FIG. 6 is a schematic flowchart of a resource selection method according to an embodiment of this application;
FIG. 7 and FIG. 8 are schematic interaction diagrams of a resource selection method according to an embodiment of this application;
FIG. 9 is a schematic flowchart of a resource selection method according to an embodiment of this application;
FIG. 10 to FIG. 12 are schematic interaction diagrams of a resource selection method according to an embodiment of this application;
FIG. 13 is a schematic flowchart of a resource selection method according to an embodiment of this application;
FIG. 14 to FIG. 16 are schematic interaction diagrams of a resource selection method according to an embodiment of this application;
FIG. 17 is a block diagram of a structure of a communication apparatus according to an embodiment of this application;
FIG. 18 is a block diagram of a structure of a communication apparatus according to an embodiment of this application; and
FIG. 19 is a block diagram of a structure of a chip system according to an embodiment of this application.

### DESCRIPTION OF EMBODIMENTS

The following describes technical solutions in embodiments of this application with reference to the accompanying drawings.

The technical solutions provided in this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) mobile communication system, or a new radio access technology (new radio access technology, NR). The 5G mobile communication system may include non-standalone (non-standalone, NSA) and/or standalone (standalone, SA). The technical solutions provided in this application may be further applied to a future communication system, such as a 6th generation (6th generation, 6G) mobile communication system. This is not limited in this application.

The technical solutions in this application may be applied to various scenarios in which terminal apparatuses communicate with each other, for example, machine type communication (machine type communication, MTC), a machine-to-machine communication long term evolution technology (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, an internet of vehicles. Communication modes in an internet of vehicles system are collectively referred to as vehicle-to-X (vehicle-to-X, V2X, where X can stand for anything). For example, the V2X may include: vehicle-to-vehicle (vehicle-to-vehicle, V2V) communication, vehicle-to-infrastructure (vehicle-to-infrastructure, V2I) communication, vehicle-to-pedestrian (vehicle-to-vehicle, V2P) communication, vehicle-to-network (vehicle-to-network, V2N) communication, or the like.

In embodiments of this application, the terminal apparatus may be, for example, a terminal device, or a module configured to implement a function of the terminal device, for example, a chip or a chip system. The chip or the chip system may be disposed in the terminal device.

The terminal device is a device that provides voice and/or data connectivity for a user, and may also be referred to as a user equipment (user equipment, UE), a mobile station (mobile station, MS), a mobile terminal (mobile terminal, MT), an access terminal, a subscriber unit, a subscriber station, a remote station, a remote terminal, a mobile device, a user terminal, a terminal, a wireless communication device, a user agent, a user apparatus, or the like. For example, the terminal device may be a device in a V2X system, a device in a D2D system, or a device in an MTC system. For example, the terminal device may be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a mixed reality (mixed reality, MR) device, an extended reality (extended reality, XR) device, a wireless terminal in industrial control (industrial control), self-driving (self-driving), remote medical surgery (remote medical surgery), a smart grid (smart grid), transportation safety (transportation safety), a smart city (smart city), or a smart home (smart home), or the like. For another example, the terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless connection function, a computing device or another processing device connected to a wireless modem, a vehicle-mounted device, a wearable device, a terminal in a 5G communication network or a network after 5G, a terminal in a future evolved communication network, or the like. A specific technology and a specific device form that are used by the terminal device are not limited in embodiments of this application.

A network apparatus in embodiments of this application may also be referred to as a network device, and is a device that provides access for the terminal apparatus. The network device may also be referred to as an access network device or a radio access network (radio access network, RAN) device. For example, the network device may be a base station. The base station may cover the following names in a broad sense, or may be replaced with the following names, for example, a NodeB (NodeB), an evolved NodeB (evolved NodeB, eNB), a next generation NodeB (next generation NodeB, gNB), a relay station, an access point, a transmission point (transmitting and receiving point, TRP), a transmission point (transmitting point, TP), a primary station, a secondary station, a multi-standard radio (motor slide retainer, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, an analogue, or a combination thereof. The base station may alternatively be a communication module, a modem, or a chip that is disposed in the foregoing device or apparatus. The base station may alternatively be a mobile switching center, a device that functions as a base station in D2D, V2X, and M2M communication, a network side device in a 6G network, a device that functions as a base station in a future communication system, or the like. The base station may support networks using a same access technology or different access technologies. A specific technology and a specific device form that are used by the network device are not limited in embodiments of this application.

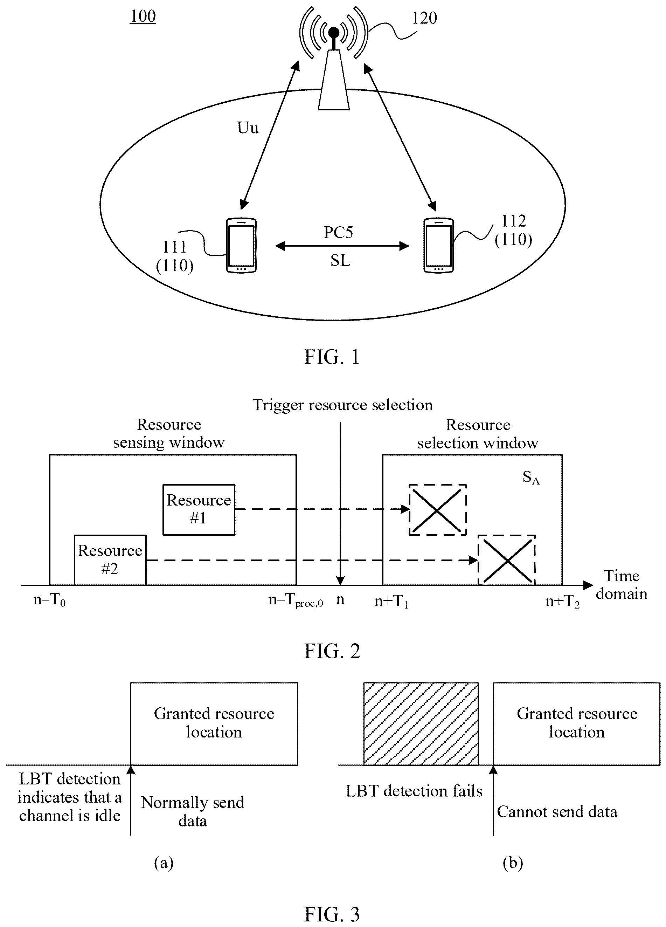

FIG. 1 is a diagram of a communication system to which this application is applicable.

As shown in FIG. 1, the communication system 100 includes at least two terminal devices 110, for example, a terminal device 111 and a terminal device 112 shown in FIG. 1. For ease of description and differentiation, in the following embodiments, the terminal device 111 is referred to as a first terminal device, and the terminal device 112 is referred to as a second terminal device. In some embodiments, the communication system 100 may further include at least one network device 120.

The terminal device 110 may communicate with the network device 120. For example, the terminal device 110 may communicate with the network device 120 through a Uu interface. A communication link (link) between the terminal device 110 and the network device 120 may be denoted as a Uu link, and may also be referred to as a primary link. For example, as shown in FIG. 1, the network device 120 may directly communicate with the first terminal device 111, and the network device 120 may also directly communicate with the second terminal device 112. The network device 120 and the first terminal device 111 (which may be referred to as a remote UE or a Remote UE) may alternatively communicate with each other via the second terminal device 112 (which may be referred to as a relay UE or a Relay UE), and the network device 120 and the second terminal device 112 (which may be referred to as a remote UE) may alternatively communicate with each other via the first terminal device 111 (which may be referred to as a relay UE). The communication link between the network device 120 and the terminal device 110 may include an uplink (uplink, UL) and a downlink (downlink, DL). The UL is used to transmit data sent by the terminal device 110 to the network device 120, and the DL is used to transmit data sent by the network device 120 to the terminal device 110.

The terminal devices 110 may also communicate with each other. For example, the terminal devices 110 may communicate with each other through a PC5 interface, and a communication link between the terminal devices 110 may be denoted as a sidelink (sidelink, SL), and may also be referred to as a sidelink or a secondary link. As shown in FIG. 1, the first terminal device 111 and the second terminal device 112 may communicate with each other through the sidelink. A terminal device that sends data may be referred to as a transmission user equipment or a transmission terminal device (a transmission UE, a TX UE), and a terminal device that receives the data may be referred to as a reception user equipment or a reception terminal device (a reception UE, an RX UE). The terminal devices may directly communicate with each other, or may communicate with each other via another terminal device. In a scenario in which two terminal devices communicate with each other via another terminal device, the two terminal devices are respectively referred to as a source UE (or a Source UE) and a target UE (or a target UE), and an intermediate terminal device may be referred to as a relay UE (or a Relay UE).

In this embodiment of this application, the PC5 interface is an interface between the terminal devices. Communication between the first terminal device 111 and the second terminal device 112 is used as an example. The first terminal device 111 and the second terminal device 112 may directly communicate with each other through the PC5 interface without using the network device 120.

In some embodiments, SL communication between the terminal devices may be performed within network coverage, or may be performed without network coverage. For example, SL communication between the terminal devices may be used for the internet of vehicles or an intelligent transportation system (intelligent transportation system, ITS), for example, V2X communication described above; or may be used for communication between a remote UE and a relay UE in an SL UE-network device relay (UE-to-Network Relay) scenario, and communication between a source UE and a relay UE and communication between a relay UE and a target UE in an SL UE-UE relay (UE-to-UE Relay) scenario.

It may be understood that FIG. 1 is merely a simplified diagram of an example for ease of understanding. The communication system 100 may further include another network device or another terminal device, which is not shown in FIG. 1.

For ease of understanding embodiments of this application, the following briefly describes several terms in this application.

### 1. Resource pool

SL communication (for example, NR SL communication) may be performed based on a resource pool (resource pool). The resource pool is a time-frequency resource dedicated to SL communication.

### 2. Resource

Data or information may be carried on a resource. The resource may include a resource in time domain (time domain resource for short) and a resource in frequency domain (frequency domain resource for short).

In time domain, the resource may include one or more time domain units (or time units). A time domain unit may be a symbol (symbol), a mini-slot (mini-slot), a slot (slot), a partial slot (partial slot), a sensing slot (sensing slot), a subframe (subframe), a radio frame (frame), or the like.

In frequency domain, the resource may include one or more frequency domain units. A frequency domain unit may be a resource element (resource element, RE), a resource block (resource block, RB), a subchannel (subchannel), a resource pool (resource pool), a bandwidth (bandwidth), a bandwidth part (bandwidth part, BWP), a carrier (carrier), a channel (channel), an interlace (interlace) RB, or the like.

In this application, a resource used to transmit SL information may be referred to as an SL resource.

3. Physical sidelink control channel (physical sidelink control channel, PSCCH) and physical sidelink shared channel (physical sidelink shared channel, PSSCH)

The PSCCH carries first stage sidelink control information (first stage sidelink control information, first stage SCI or SCI-1), and the PSSCH carries second stage sidelink control information (second stage sidelink control information, second stage SCI or SCI-2) and/or data. The first stage SCI indicates a time-frequency domain resource for PSSCH transmission, and the second stage SCI indicates an attribute of hybrid automatic repeat request (hybrid automatic repeat request, HARQ) feedback. Without ambiguity, when SCI is not distinguished, the SCI mentioned in this application is the first stage SCI and/or the second stage SCI.

Because the SCI carries information about a resource used by a terminal device, a terminal device that needs to send data may learn of, by sensing SCI sent by another terminal device, specific time-frequency domain resources used by the another terminal device. Correspondingly, when selecting a resource, the terminal device that needs to send the data may select a time-frequency domain resource that is not used by the another terminal device or preempt a resource with a low priority.

### 4. Manner in which a terminal device obtains an SL resource

### (1) Base station scheduling mode (mode 1)

When a terminal device operates in the model 1, a base station may schedule an SL resource for the terminal device by using downlink control information (downlink control information, DCI), or configure an SL configured grant (configured grant) for the terminal device by using a radio resource control (radio resource control, RRC) message.

### (2) Autonomous contention mode (mode 2)

When a terminal device operates in the model 2, the terminal device may receive an SL resource pool configuration from a base station, or obtain an SL resource pool configuration from a pre-configuration, and then select an SL resource from an SL resource pool for transmission. The SL resource may be randomly selected, or selected based on a result of sensing (sensing) or partial sensing (partial sensing). A process in which the terminal device selects the SL resource based on the result of sensing or partial sensing may also be referred to as resource sensing and resource selection.

In this application, SL communication in the mode 2 is mainly considered.

### 5. SL resource sensing and resource selection

### (1) Resource sensing process

A terminal device senses, in a resource sensing window (sensing window) (which may also be referred to as a monitoring window), SL resource usage and a resource reservation status of another terminal device by sensing SCI sent by the another terminal device. The resource sensing window is a window in which the terminal device performs resource sensing, and includes multiple logically consecutive time units.

### (2) Resource selection process

The terminal device determines, based on a sensing result obtained in the resource sensing process, a resource used for SL transmission, that is, a candidate resource set (usually represented by S_{A}). A resource selection window is a window in which the terminal device selects a resource. The candidate resource set includes an SL resource available to the terminal device.

More specifically, in NR, resource allocation in the mode 2 is supported, and resource reservation is supported on the sidelink. To be specific, information sent by using SCI includes resource reservation information in a future period of time. After receiving the reservation information in the SCI, another terminal device excludes a reserved resource, to avoid a resource conflict. Therefore, the terminal device excludes, in a resource selection window, an SL resource reserved by the another terminal device, and a remaining part is a candidate resource set available to the terminal device.

For ease of understanding, with reference to FIG. 2, in the mode 2, the TX UE may perform resource sensing in a resource sensing window (for example, a time unit set corresponding to [n-T₀, n-T_{proc,0}] before a time unit n for triggering resource selection). In this case, the TX UE may also be referred to as a sensing UE. It is assumed that the sensing UE triggers resource selection in a slot (for example, the time unit n), and the sensing UE excludes, from a resource selection window (for example, a time unit set corresponding to [n+T₁, n+T₂] after the time unit n for triggering resource selection) based on a sensing result for the resource sensing window, a resource that has been reserved by another terminal device. In other words, the sensing UE excludes a slot to be used for sending from a resource pool, to form a candidate resource set. For example, assuming that the sensing UE senses, in the resource sensing window, that a resource #1 and a resource #2 are used by another terminal device, the sensing UE excludes, from the resource selection window, a resource that falls within the resource selection window and that is in a reserved resource indicated by SCI in the resource #1 and the resource #2, and a remaining part in the resource selection window is a candidate resource set.

The reserved resource may be understood as a resource that is pre-specified or occupied by a UE and that is used by the UE to subsequently send information.

### 6. A group of parameters used for resource sensing and resource selection

### (1) Priority

A service priority of a terminal device is a transmission priority (transmission priority) of the UE. Because the UE may simultaneously send multiple services, priorities of the multiple services may be different.

The service priority may also be referred to as an L1 priority (L1 priority), a physical layer priority, a priority carried in SCI, a priority corresponding to a PSSCH associated with SCI, a transmission priority, a priority of sending a PSSCH, a priority for resource selection, a priority of a logical channel, a priority with a highest class of a logical channel, or a process priority.

There is a correspondence between a priority class and a priority value. For example, in some scenarios, a higher priority class corresponds to a lower priority value, or this may be understood as that a lower priority value represents a higher-class priority. For another example, in some scenarios, a lower priority class corresponds to a lower priority value, or this may be understood as that a lower priority value represents a lower-class priority.

For example, a value range of the priority value is, for example, an integer from 0 to 7. When a lower priority value represents a higher-class priority, the priority value 0 represents a highest-class priority. When a lower priority value represents a lower-class priority, the priority value 7 represents a highest-class priority.

For ease of description, provided that no ambiguity is caused, in this application, an example in which a higher priority class corresponds to a lower priority value is used for description. In addition, unless otherwise specified, in the following embodiments, the "priority" used independently is understood as a service priority or an equivalent meaning thereof.

The service priority is related to a resource selection process of the terminal device. A higher service priority means that data is more important. When the service priority of the terminal device is higher than a service priority of another terminal device, the terminal device may preempt an SL resource that has been reserved by the another terminal device.

Still refer to FIG. 2. It is assumed that the sensing UE senses, in the resource sensing window, that a reserved resource of a UE #1 falls within the resource selection window. If a service priority of the UE #1 is lower than a service priority of the sensing UE, even if the UE #1 reserves the reserved resource in the resource selection window, the sensing UE may preempt the reserved resource of the UE #1 for use.

### (2) Remaining packet delay budget (remaining packet delay budget, Remaining-PDB or R-PDB)

The remaining packet delay budget is a remaining budget delay of data, and is a remaining delay in a packet delay budget (packet delay budget, PDB). A packet (packet) is invalid when time expires.

The R-PDB is related to the resource selection process of the terminal device, and is used by a physical layer to determine a location of the resource selection window. Specifically, the R-PDB determines an end location (a location indicated by (n+T₂) shown in FIG. 2) of the resource selection window in time domain.

### (3) Quantity of subchannels

The quantity of subchannels is a quantity of frequency resources required by data. The terminal device may select a value between a preconfigured minimum quantity of subchannels (sl-MinSubChannelNumPSSCH) used to send a PSSCH and a preconfigured maximum quantity of subchannels (sl-MaxSubchannelNumPSSCH) used to send the PSSCH as the quantity of subchannels.

The quantity of subchannels is related to the resource selection process of the terminal device. Specifically, the quantity of subchannels determines a frequency domain size of the candidate resource set, that is, determines a start location and an end location of the candidate resource set in frequency domain. A frequency domain bandwidth of the candidate resource set is greater than a bandwidth corresponding to the quantity of subchannels.

### (4) Resource reservation period

The resource reservation period is used by the terminal device to exclude an intersection set of a resource reserved by the terminal device and a resource reserved by another terminal device, to ensure that the resource reserved by the terminal device does not overlap the resource reserved by the another terminal device.

The resource reservation period may be configured by the base station for the terminal device by using an RRC message or a system broadcast information (system information broadcast, SIB) message, or may be selected by the terminal device from pre-configuration information. For example, the base station may configure a resource reservation period list (sl-ResourceReservePeriodList) for the terminal device, or the pre-configuration information of the terminal device includes a resource reservation period list, and the terminal device selects a resource reservation period from the resource reservation period list as a resource reservation period of corresponding data.

Generally, when selecting a resource for periodically sent data (which may be referred to as periodic data for short below, for example, a periodic protocol data unit (protocol data unit, PDU)), the terminal device needs a corresponding resource reservation period parameter, and grants a periodic SL resource to the data based on the resource reservation period. When selecting a resource for aperiodically sent data (which may be referred to as aperiodic data for short below, for example, a single (single) PDU), the terminal device does not need a resource reservation period parameter.

A group of parameters used for resource sensing and resource selection is obtained by a MAC layer of the terminal device, and is provided for a physical layer for resource sensing and resource selection. Generally, for the periodic data, parameters provided by the MAC layer for the physical layer include the service priority, the R-PDB, the quantity of subchannels, and the resource reservation period. For the aperiodic data, parameters provided by the MAC layer for the physical layer include the service priority, the R-PDB, and the quantity of subchannels.

### 7. Licensed spectrum (licensed spectrum) and unlicensed spectrum (unlicensed spectrum)

The licensed spectrum has strict restrictions and protection, can be used only by some organizations or operators, and is characterized by low interference and security. For example, the licensed spectrum is used for a technology such as 2G/3G/4G/5G, and needs to be applied for by a telecom operator before being used.

The unlicensed spectrum is a shared spectrum, may be used by different operators/organizations, and is used as a supplementary tool for operators to enhance their services. The unlicensed spectrum can be used for communication without application and is free of charge. For example, the unlicensed spectrum is used for a technology such as wireless fidelity (wireless fidelity, Wi-Fi), Bluetooth, or Zigbee (Zigbee). On the premise of ensuring that no interference is caused to another user, a standard-compliant device such as a Wi-Fi device, a Bluetooth device, or a Zigbee device may access and use the unlicensed spectrum.

Communication on the unlicensed spectrum needs to comply with some regulations, for example, a listen-before-talk (listen-before-talk, LBT) requirement, to ensure fairness of accessing a channel by each type of UE running on the spectrum.

### 8. Listen-before-talk (listen-before-talk, LBT) or channel access

To fairly use the unlicensed spectrum, a communication device needs to perform LBT before sending a signal on the unlicensed spectrum. This may also be understood as performing channel access, that is, first sensing whether a channel is idle (idle). This detection process may be referred to as clear channel assessment (clear channel assessment, CCA). If the channel is idle for a period of time, the channel can be occupied, and the communication device can transmit information on the channel. If the channel is not idle, the channel can be occupied only after the communication device waits for the channel to be idle again. LBT includes type1 (type1) LBT and type2 (type2) LBT.

Type1 LBT is energy detection that is based on a backoff mechanism. For a specific bandwidth, a window is defined. The window defines a range of a quantity of detected slots. The communication device randomly selects a value A from the window (or a value range). After detecting at least A idle slots for energy detection, the communication device considers that a channel is idle, and therefore the communication device may use the idle channel to transmit data. Otherwise, the communication device considers that a channel is busy, and therefore the communication device does not use the busy channel to transmit data. In type1 LBT, backoff time is related to a channel access priority (channel access priority class, CAPC), and a channel can be accessed only when the channel is idle for long time.

Type2 LBT is energy detection that is based on fixed duration. For a specific bandwidth, for example, 20 MHz, if energy of a signal received by the communication device (a terminal device or a network device) within fixed duration is less than or equal to a preset threshold, the communication device considers that a channel is idle, and therefore the communication device may use the idle channel to transmit data. Otherwise, the communication device considers that a channel is busy, and therefore the communication device does not use the busy channel to transmit data. In type2 LBT, a channel can be accessed only when the channel is idle for short time (for example, 16 µs (microseconds) or 25 µs).

Two results may be obtained when a channel access procedure is performed: LBT success and LBT failure. Refer to (a) in FIG. 3. If the terminal device detects, through LBT, that a channel is idle before a granted resource location, the terminal device may perform data transmission on the resource. Refer to (b) in FIG. 3. If LBT detection performed by the terminal device before a granted resource location fails, the terminal device cannot perform data transmission on the resource.

### 9. Channel occupancy time (channel occupancy time, COT)

Before the terminal device sends data, if type1 LBT detection succeeds, the terminal device sends the data on the resource. To enable subsequent continuous data to continue to be sent in terms of time, a protocol specifies that the terminal device is allowed to continue to use the resource for a subsequent period of time without performing type1 LBT. The period of time is the channel occupancy time COT. A purpose of introducing a COT mechanism is to avoid frequent type1 LBT detection performed by the terminal device when the terminal device sends continuous data.

A frequency domain unit of the COT is a channel, and a time domain unit of the COT is ms or a slot. In this application, the COT may be a time concept, that is, time for SL transmission, or may be a resource concept, that is, a time-frequency resource occupied by SL transmission.

A size of the COT is related to a CAPC of sent data (that is, a transport block (transport block, TB)). Generally, there is a correspondence between a CAPC class and a CAPC value. For example, in some scenarios, a higher CAPC class corresponds to a lower CAPC value. For data with a high CAPC class, it is easier for the terminal device to access a channel, but a maximum channel occupancy time (that is, a maximum value of the COT) is short. For data with a low CAPC class, it is more difficult for the terminal device to access a channel, but a maximum channel occupancy time (that is, a maximum value of the COT) is long.

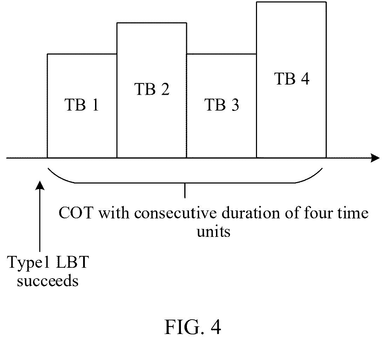

For example, FIG. 4 is a diagram of sending continuous data within a COT. As shown in FIG. 4, before the terminal device sends data, type1 LBT succeeds, and the terminal device may transmit multiple pieces of continuous data in time domain within a COT. For example, the COT may be a COT with consecutive duration of four time units, and the terminal device may sequentially send a TB 1, a TB 2, a TB 3, and a TB 4 in the four time units. In some embodiments, the COT may be used by multiple terminal devices to transmit data. For example, a terminal device that initiates the COT transmits a TB 1 and a TB 3 in a 1^{st} time unit and a 3^{rd} time unit, and a terminal device that shares the COT transmits a TB 2 and a TB 4 in a 2^{nd} time unit and a 4^{th} time unit.

SL communication is mainly a link technology introduced to support direct communication between terminal devices. Before NR R18, the licensed spectrum is used for SL communication. Therefore, regardless of whether the terminal device operates in the mode 1 or the mode 2, a resource used by the terminal device to transmit data is a resource of the licensed spectrum.

When a mode in which the terminal device obtains the SL resource is the model 2, a MAC entity of the terminal device needs to perform resource grant to to-be-sent data. A granularity of the resource grant performed by the MAC entity is specific to one SL process (process), and all the SL processes are independent of each other. The SL process is a concept of the MAC layer, and may be simply understood as a container carrying to-be-sent data. A function of the SL process is to form a TB and obtain a transmission resource for the TB. One SL process may include one or more logical channels, and each logical channel carries data. After the MAC entity performs resource grant to an SL process, the SL process generates only one TB. Because there is a one-to-one correspondence between an SL process (a process for short below) and a TB, descriptions using a process as a granularity in embodiments of this application may also be considered as descriptions of a TB generated by the process.

When data needs to be sent on a logical channel of a process, the MAC entity needs to grant an SL resource to the data. To trigger the physical layer to perform resource sensing and resource selection for the data, the MAC layer needs to provide a group of parameters for the physical layer. The physical layer may perform resource sensing and resource selection based on the group of parameters, to find a candidate resource set for data in the process. The group of parameters provided by the MAC layer for the physical layer corresponds to the process, and also corresponds to the data in the process, that is, the TB generated by the process.

Herein, the to-be-sent data is classified into periodic data and aperiodic data in terms of a type. The periodic data is periodically sent data, and needs a periodic SL grant resource. The aperiodic data is aperiodically sent data, and does not need a periodic SL grant resource. When the to-be-sent data is periodic data (for example, a periodic PDU), a group of parameters provided by the MAC layer for the physical layer include a service priority, an R-PDB, a quantity of subchannels, and a resource reservation period. When the to-be-sent data is aperiodic data (for example, a single PDU), a group of parameters provided by the MAC layer for the physical layer include a service priority, an R-PDB, and a quantity of subchannels. In other words, for the aperiodic data, the MAC layer does not provide a resource reservation period parameter, that is, the resource reservation period, for the data to the physical layer. The service priority, the R-PDB, the quantity of subchannels, and the resource reservation period are described in detail above. For details, refer to the foregoing related descriptions. For brevity, details are not described herein again.

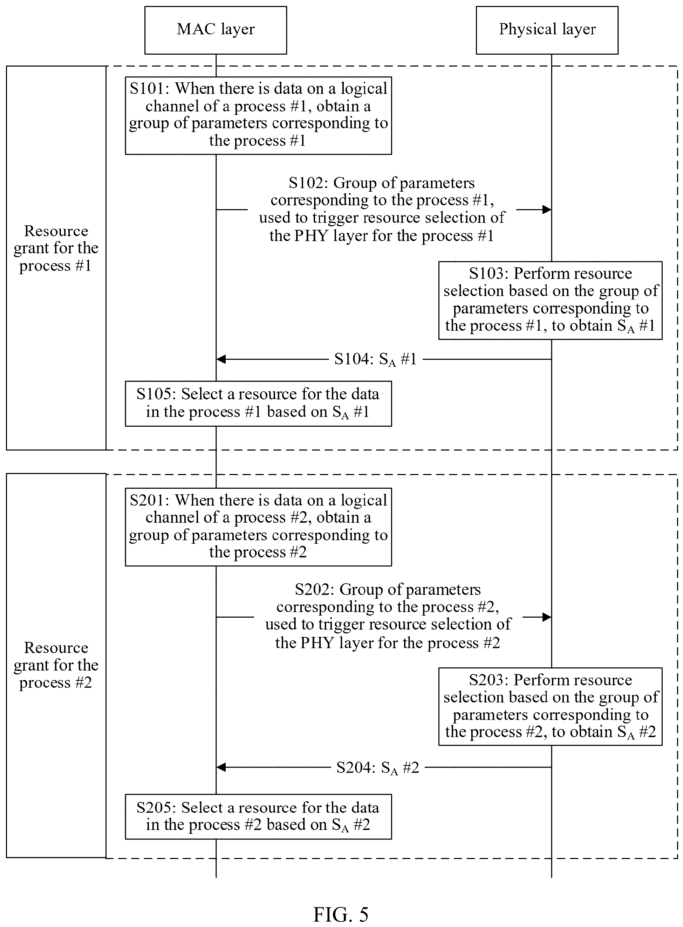

For example, for ease of understanding, FIG. 5 is a schematic flowchart in which a terminal device performs SL resource grant. As shown in FIG. 5, assuming that both data on a logical channel of a process #1 and data on a logical channel of a process #2 need to be sent, a MAC layer separately performs resource grant on the process #1 and the process #2.

A resource grant process of the MAC layer for the process #1 includes step S101 to step S105, and a resource grant process for the process #2 includes step S201 to step S205. As shown in FIG. 5, when there is the data on the logical channel of the process #1 and the data on the logical channel of the process #2, the MAC layer separately obtains a group of parameters corresponding to the process #1 and a group of parameters corresponding to the process #2, and sends the parameter groups to a physical layer. The physical layer separately performs resource selection based on the parameter group corresponding to the process #1 and the parameter group corresponding to the process #2, to obtain a candidate resource set S_{A} #1 used for transmitting the data in the process #1 and a candidate resource set S_{A} #2 used for transmitting the data in the process #2. The MAC layer selects, in S_{A} #1, a resource for the data in the process #1, and selects, in S_{A} #2, a resource for the data in the process #2, to complete resource grant to the process #1 and the process #2.

It can be learned from FIG. 5 that, the group of parameters of the MAC layer for the physical layer to perform resource sensing and resource selection is at a granularity of a process, and each process corresponds to one group of parameters. All processes of the MAC layer are independent of each other, and each process triggers a resource sensing and resource selection process of the physical layer. Therefore, processes in which the MAC layer performs resource grant to data in each process are independent of each other.

With reference to FIG. 5, the foregoing describes a resource grant process used when the terminal device uses the licensed spectrum in SL communication. In R18, to support transmission of a higher-rate service, a spectrum used for SL communication is extended from the licensed spectrum to the unlicensed spectrum with a large bandwidth. This communication technology is an SL-U communication technology, and is referred to as an unlicensed spectrum-based SL communication technology.

In addition, in the RAN1#110e meeting, for SL-U communication, it is agreed that multi-consecutive slots transmission is supported in a subsequent scenario for the mode 2, to implement an effect of continuous transmission. In this manner, a quantity of channel access times when one or more TBs are transmitted can be reduced, to increase channel access efficiency of entire communication. For example, when multiple TBs are transmitted in an MCSt manner, type1 LBT needs to be successfully performed only before new transmission of a 1^{st} TB, and a COT with multiple consecutive slots are obtained through preemption. The multiple slots may correspond to initial transmission resources and/or retransmission resources of the multiple TBs respectively. In this way, type1 LBT does not need to be performed again for retransmission of the 1^{st} TB and new transmission or retransmission of another TB.

However, in this scenario, how the terminal device selects a resource for multi-consecutive slots transmission is an urgent problem to be resolved. A reason is that to allocate a granted resource to data in a process, the MAC layer of the terminal device provides a group of parameters related to the process to the physical layer, and the physical layer may select a candidate resource set for the data in the process based on the group of parameters. To implement a multi-consecutive slots transmission mechanism in the SL-U scenario, if the solution shown in FIG. 5 is still used, the terminal device separately selects a respective candidate resource set for data in each of multiple processes. If the candidate resource sets corresponding to the multiple processes do not overlap in time domain, the terminal device cannot select multiple consecutive slots for the data in the multiple processes, and the terminal device cannot perform data transmission in the multiple consecutive slots.

Therefore, to resolve the foregoing problem, an embodiment of this application provides a resource selection method. The method provided in this embodiment of this application may be applied to an SL communication system, for example, the communication system shown in FIG. 1. The communication system may include at least two terminal devices, and the terminal devices communicate with each other by using an SL communication technology.

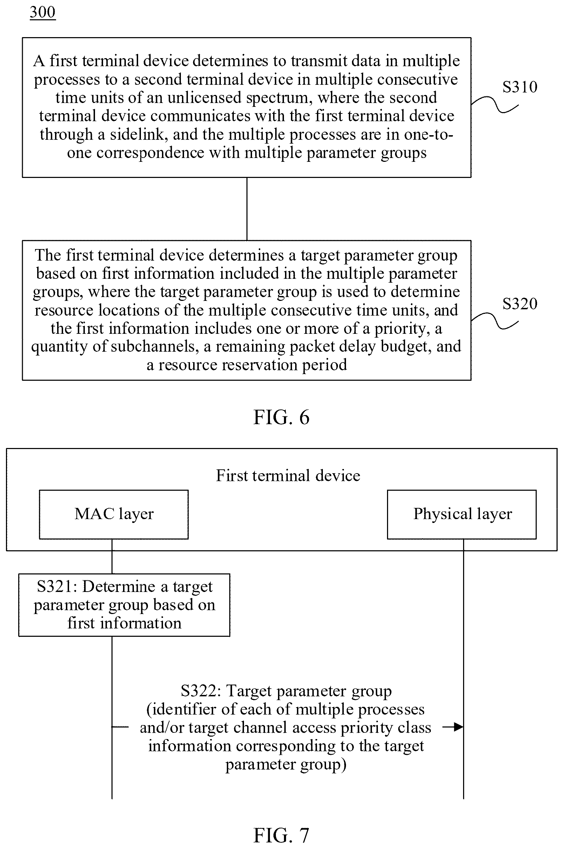

FIG. 6 is a schematic flowchart of a resource selection method according to an embodiment of this application. The method 300 shown in FIG. 6 is performed by a terminal device, and the terminal device may be, for example, the terminal device 110 shown in FIG. 1. As shown in FIG. 6, the method 300 includes step S310 and step S320.

S310: A first terminal device determines to transmit data in multiple processes to a second terminal device in multiple consecutive time units of an unlicensed spectrum.

The second terminal device communicates with the first terminal device through a sidelink. In other words, the first terminal device communicates with the second terminal device through the sidelink of the unlicensed spectrum.

In this embodiment of this application, unicast communication, multicast communication, or broadcast communication may be performed between the first terminal device and the second terminal device. This is not limited herein.

The multiple processes are in one-to-one correspondence with multiple parameter groups. It can be learned from the foregoing descriptions that, for each process, a MAC layer of the first terminal device obtains a corresponding group of parameters, and the group of parameters is referred to as a parameter group in this embodiment of this application. Each of the multiple parameter groups may include at least one parameter, and types of parameters included in different parameter groups in the multiple parameter groups may be the same or may be different. One process in the multiple processes is used as an example. A parameter included in a parameter group corresponding to the process may be determined based on a type of data in the process, a priority of a logical channel in the process, and the like. This is not limited in this embodiment of this application.

For example, one of the multiple parameter groups may include a priority, a quantity of subchannels, and an R-PDB. Alternatively, one of the multiple parameter groups includes a priority, a quantity of subchannels, an R-PDB, and a resource reservation period. It may be understood that the parameter group may further include more or fewer parameters than those in the example, or another parameter. This is not limited in this application.

In this embodiment of this application, a time unit may be, for example, a symbol, a slot, a mini-slot, a partial slot, a subframe, a radio frame, a sensing slot, or the like. This is not limited in this application.

It should be noted that, that the data in the multiple processes is transmitted in the multiple consecutive time units means that a part or all of the multiple consecutive time units are used to transmit the data in the multiple processes. Herein, a quantity of time units in the multiple consecutive time units is greater than or equal to a quantity of processes in the multiple processes, and is less than a maximum length of a COT. The maximum length of the COT is determined based on a CAPC used when the first terminal device performs LBT.

In an embodiment, all of the multiple consecutive time units are used to transmit the data in the multiple processes. For example, the multiple consecutive time units may be used for initial transmission and/or retransmission of the data in the multiple processes. If the multiple consecutive time units are used for initial transmission of process data, a quantity of time units is equal to a quantity of processes. If the multiple consecutive time units are used for initial transmission and retransmission of process data, a quantity of time units is greater than a quantity of processes.

In another embodiment, a part of the multiple consecutive time units are used to transmit the data in the multiple processes, and a rest of the multiple consecutive time units (that is, a time unit other than the time unit used to transmit the data in the multiple processes in the multiple consecutive time units) are used to transmit other data. For example, the rest of the multiple consecutive time units may be used to transmit data of a terminal device other than the first terminal device and/or a sidelink synchronization signal block (SL synchronization signal block, SL SSB) corresponding to the first terminal device.

S320: The first terminal device determines a target parameter group based on first information included in the multiple parameter groups, where the target parameter group is used to determine resource locations of the multiple consecutive time units.

Herein, the first information includes one or more of the priority, the quantity of subchannels, the R-PDB, and the resource reservation period.

In other words, in general, the multiple parameter groups may include one or more of the priority, the quantity of subchannels, the R-PDB, and the resource reservation period. One of the multiple parameter groups may include a part or all of parameters in the first information, or may not include the first information.

In this embodiment of this application, the target parameter group may be used in a resource sensing and resource selection process of the first terminal device, and determines a time-frequency domain resource location of a candidate resource set. The first terminal device may obtain a candidate resource set based on the target parameter group (that is, a group of parameters corresponding to the multiple processes). In this way, the first terminal device may determine, based on the candidate resource set, a resource location used to transmit the data in the multiple processes.

In this embodiment of this application, the first terminal device selects a group of parameters based on the first information included in the multiple parameter groups, and then selects, based on the group of parameters, a candidate resource set that is appropriate for the multiple processes, to determine the multiple consecutive time units, so that continuous data can be transmitted in the multiple consecutive time units, to improve SL-U transmission efficiency.

In this embodiment of this application, the first terminal device determines the target parameter group based on the first information in multiple manners.

In an implementation, the first terminal device may determine the target parameter group based on a first parameter in the first information, where the first parameter may be one of the priority, the quantity of subchannels, the R-PDB, and the resource reservation period.

In an example, the first terminal device determines, based on a value of the first parameter, that a first parameter group in the multiple parameter groups is the target parameter group, where a value of a first parameter in the first parameter group meets a first preset condition.

In other words, when the value of the first parameter in the first parameter group in the multiple parameter groups meets the first preset condition, the first parameter group may be used as the target parameter group. In this way, a parameter that meets a data transmission requirement of the multiple processes can be quickly found at low costs. This is simple and efficient.

In some embodiments, the first preset condition may include: The value of the first parameter in the first parameter group is greater than or less than a value of a first parameter in a parameter group other than the first parameter group in the multiple parameter groups, or is closest to an average value of first parameters in the multiple parameter groups.

For example, the first terminal device may determine a target first parameter based on values of the first parameters included in the multiple parameter groups, where a value of the target first parameter is a largest value or a smallest value in the first parameters included in the multiple parameter groups, or is closest to the average value of the first parameters included in the multiple parameter groups, and the target first parameter corresponds to the first parameter group. The first terminal device determines the first parameter group corresponding to the target first parameter as the target parameter group.

In other words, the first terminal device may first find, from the multiple parameter groups, the value of the first parameter that meets the first preset condition, use the first parameter as the target first parameter, and then use the parameter group to which the target first parameter belongs as the target parameter group.

Herein, a part of the multiple parameter groups may include the first parameter, or each of the multiple parameter groups includes the first parameter. Therefore, the foregoing "a parameter group other than the first parameter group in the multiple parameter groups" may be understood as a parameter group having the first parameter other than the first parameter group in the multiple parameter groups, and the foregoing "an average value of first parameters in the multiple parameter groups" may be understood as an average value obtained after values of first parameters corresponding to parameter groups having the first parameter in the multiple parameter groups are summed.

The following separately describes different cases.

### Case (1)

Each of the multiple parameter groups includes a first parameter, and types of parameters included in any two of the multiple parameter groups are the same.

In this case, because the types of the parameters included in the any two parameter groups are the same, the first parameter may be any one of the priority, the quantity of subchannels, the R-PDB, and the resource reservation period. When the first parameter group is selected from the multiple parameter groups based on the value of the first parameter, and the first parameter group is used as the target parameter group, the target parameter group also includes a parameter of a same type.

For ease of understanding, the following uses an example for description with reference to a specific parameter.

By way of example and not limitation, each of the multiple parameter groups may include the priority, the quantity of subchannels, the R-PDB, and the resource reservation period, or include the priority, the quantity of subchannels, and the R-PDB.

In this embodiment of this application, when a parameter group corresponding to a process includes the resource reservation period, it indicates that data in the process is periodic data or indicates that data in the process includes periodic data. When a parameter group corresponding to a process does not include the resource reservation period, it indicates that data in the process is aperiodic data or indicates that data in the process does not include periodic data. For example, the periodic data may include a periodic PDU, and the aperiodic data may include a single PDU.

For example, when the first parameter is the priority, the priority is used as a selection criterion, and the first terminal device may use a parameter group whose priority value in the multiple parameter groups is largest, smallest, or closest to an average value of priorities in the multiple parameter groups as the target parameter group.

It may be understood that, a process corresponding to a parameter group with a smallest priority value has a highest priority in the multiple processes, and a process corresponding to a parameter group with a largest priority value has a lowest priority in the multiple processes.

In some embodiments, a value of the priority may be an integer from 1 to 8, or an integer from 0 to 7.

When the priority is used as the selection criterion, the first terminal device preferentially considers importance of the data. When a value of the priority in the target parameter group is a largest value, that is, a priority class is lowest, contention for resource reservation and a resource conflict can be reduced, interference can be reduced, and transmission fairness is approached. When a value of the priority in the target parameter group is smallest, that is, a priority class is highest, the first terminal device may preempt a resource in a resource sensing and resource selection process. When a value of the priority in the target parameter group is close to an average value, transmission fairness and a range of available resources may be considered.

For example, when the first parameter is the quantity of subchannels, the quantity of subchannels is used as a selection criterion, and the first terminal device may use a parameter group whose quantity of subchannels in the multiple parameter groups is largest, smallest, or closest to an average value of quantities of subchannels in the multiple parameter groups as the target parameter group.

In some embodiments, a value of the quantity of subchannels may be an integer from 1 to 27.

When the quantity of subchannels is used as the selection criterion, the first terminal device preferentially considers a sending amount of data. When the value of the quantity of subchannels in the target parameter group is a largest value, a data transmission amount may be increased. When the value of the quantity of subchannels in the target parameter group is smallest, flexible selection of the candidate resource set is facilitated. When the value of the quantity of subchannels in the target parameter group is close to an average value, a data transmission amount and flexibility of the candidate resource set may be considered.

For example, when the first parameter is the R-PDB, the R-PDB is used as a selection criterion, and the first terminal device may use a parameter group whose R-PDB value in the multiple parameter groups is largest, or smallest, or closest to an average value of R-PDBs in the multiple parameter groups as the target parameter group.

In some embodiments, the value of the R-PDB is a PDB of data minus time of the data present in a UE, and a unit of the R-PDB is usually a millisecond.

When the R-PDB is used as the selection criterion, the first terminal device preferentially considers a sending delay of data. When the value of the R-PDB in the target parameter group is a largest value, a time domain range of the candidate resource set may be increased. When the value of the R-PDB in the target parameter group is smallest, any location of the candidate resource set may be appropriate for sending data in any process. When the value of the R-PDB in the target parameter group is close to an average value, a length of the candidate resource set and the candidate resource set may be considered to adapt to more processes.

For example, when the first parameter is the resource reservation period, the resource reservation period is used as a selection criterion, and the first terminal device may use a parameter group whose resource reservation period value in the multiple parameter groups is largest, smallest, or closest to an average value of resource reservation periods in the multiple parameter groups as the target parameter group.

In some embodiments, the value of the resource reservation period may be an integer from 0 to 99, or may be 100, 200, 300, 400, 500, 600, 700, 800, 900 or 1000, and a unit of the resource reservation period is a millisecond.

When the resource reservation period is used as the selection criterion, the first terminal device preferentially considers a periodic resource for periodic data. When the value of the resource reservation period in the target parameter group is a largest value, collision with a periodic resource of another UE can be avoided. When the value of the resource reservation period in the target parameter group is smallest, more periodic resources may be reserved. When the value of the resource reservation period in the target parameter group is close to an average value, collision avoidance and reservation of more resources may be considered.

### Case (2)

A part of the multiple parameter groups include a first parameter.

In this case, because the part of the multiple parameters include the first parameter, and the other part of the multiple parameter groups do not include the first parameter, the first terminal device may select a first parameter group from the part of the multiple parameter groups based on a value of the first parameter, and use the first parameter group as the target parameter group.

In some embodiments, the first parameter may be the resource reservation period. In other words, when the part of the multiple parameter groups include the resource reservation period, the first terminal device selects a parameter group from the part of parameter groups as the target parameter group by using the resource reservation period as a selection criterion. In this way, a selected period parameter (that is, the resource reservation period) facilitates finding a periodic resource for periodic data, and another parameter may be used to determine a resource for aperiodic data.

By way of example and not limitation, the part of the multiple parameter groups may include the priority, the quantity of subchannels, the R-PDB, and the resource reservation period, and the other part of the multiple parameter groups may include the priority, the quantity of subchannels, and the R-PDB.

For example, when the first parameter is the resource reservation period, the first terminal device may use a parameter group whose resource reservation period value in the part of parameter groups is largest, smallest, or closest to an average value of resource reservation periods in the part of parameter groups as the target parameter group.

It may be understood that, because the other part of parameter groups do not include the resource reservation period, a parameter group whose resource reservation period value is largest (or smallest, or closest to an average value) in the part of parameter groups is actually the same as a parameter group whose resource reservation period value is largest (or smallest, or closest to an average value) in the multiple parameter groups.

In another implementation, the first terminal device may determine the target parameter group based on the first parameter and a second parameter in the first information. The first parameter and the second parameter may be two of the priority, the quantity of subchannels, the R-PDB, and the resource reservation period, and the first parameter is different from the second parameter.

The first terminal device may determine an appropriate group of parameters for the multiple processes with reference to multiple parameters, to meet resource requirements of different process data.

In an example, the first terminal device determines multiple candidate parameter groups from the multiple parameter groups based on the first parameter. The first terminal device selects the target parameter group from the multiple candidate parameter groups based on the second parameter.

In other words, the first terminal device first selects the multiple candidate parameter groups from the multiple parameter groups by using the first parameter as a selection criterion, and then selects a parameter group from the multiple candidate parameter groups as the target parameter group by using the second parameter as a selection criterion. In this way, a selection range of the target parameter group can be narrowed, to further determine an available target parameter group.

In some embodiments, values of first parameters of all of the multiple candidate parameter groups are the same, or values of first parameters of the multiple candidate parameter groups are within a preset range.

In this embodiment of this application, a value of a first parameter in each candidate parameter group in the multiple parameter groups meets a second preset condition, and a value of a second parameter in the target parameter group meets a third preset condition.

In some embodiments, the second preset condition may include: The value of the first parameter in each of the multiple candidate parameter groups is greater than or less than a value of a first parameter in a parameter group other than the multiple candidate parameter groups in the multiple parameter groups, or is closest to an average value of first parameters in the multiple parameter groups.

In some embodiments, the third preset condition may include: The value of the second parameter in the target parameter group is greater than or less than a value of a second parameter in a parameter group other than the target parameter group in the multiple candidate parameter groups, or is closest to an average value of second parameters in the multiple candidate parameter groups.

In this embodiment, before determining the target parameter group, the first terminal device selects the candidate parameter group from the multiple parameter groups through one time of selection. Similarly, in some other embodiments, the first terminal device may select the candidate parameter group through multiple times of selection. For example, the first terminal device selects at least three parameter groups from the multiple parameter groups based on the first parameter, selects at least two parameter groups from the at least three parameter groups based on the second parameter, and then determines the target parameter group from the at least two parameter groups based on a third parameter. The at least two parameter groups herein are candidate parameter groups.

For ease of description and understanding, the following separately discusses different cases by using an example in which the first terminal device obtains the candidate parameter group through one time of screening.

### Case (1)

Each of the multiple parameter groups includes a first parameter and a second parameter, and types of parameters included in any two of the multiple parameter groups are the same.

In this case, because the types of the parameters included in the any two parameter groups are the same, the first parameter and the second parameter may be any two of the priority, the quantity of subchannels, the R-PDB, and the resource reservation period.

For ease of understanding, the following uses an example for description with reference to a specific parameter.

By way of example and not limitation, each of the multiple parameter groups may include the priority, the quantity of subchannels, the R-PDB, and the resource reservation period, or include the priority, the quantity of subchannels, and the R-PDB.

For example, the first parameter is the priority, and the second parameter is the R-PDB. The first terminal device may use a parameter group whose priority value in the multiple parameter groups meets the second preset condition as the candidate parameter group, and then use a parameter group whose R-PDB value in the candidate parameter group meets the third preset condition as the target parameter group.

In this embodiment of this application, when the first parameter and the second parameter are respectively the priority and the R-PDB, a measurement value threshold (for example, a reference signal threshold) that matches a priority class and an appropriate resource selection window may be selected to improve resource selection accuracy and a resource range.

In some embodiments, parameters selected as the selection criteria from the priority, the quantity of subchannels, the R-PDB, and the resource reservation period may be equal, or have a same weight. In actual application, the first terminal device may select the candidate parameter group from the multiple parameter groups by using any parameter as a selection criterion, and then select the target parameter group from the candidate parameter group by using another parameter as a selection criterion.

In some embodiments, parameters selected as the selection criteria from the priority, the quantity of subchannels, the R-PDB, and the resource reservation period may have a sequence, or have different weights, where a parameter with a larger weight is preferentially used as a selection criterion. In actual application, the first terminal device first selects the candidate parameter group from the multiple parameter groups by using a parameter with a largest weight as a selection criterion, and then selects the target parameter group from the candidate parameter group by using a parameter with a second largest weight as a selection criterion.

### Case (2)

A part of the multiple parameter groups includes the priority, the quantity of subchannels, the R-PDB, and the resource reservation period, and the other part of the multiple parameter groups includes the priority, the quantity of subchannels, and the R-PDB.

In this case, the first parameter or the second parameter is the resource reservation period. In this way, the target parameter group selected from the multiple parameter groups based on the first parameter and the second parameter may include a complete group of parameters, to ensure a periodic resource requirement of periodic data.

For example, if the first parameter is the resource reservation period, each of the multiple candidate parameter groups selected by the first terminal device from the multiple parameter groups based on the resource reservation period includes the priority, the quantity of subchannels, the R-PDB, and the resource reservation period. Correspondingly, the target parameter group selected from the multiple candidate parameter groups based on any parameter other than the resource reservation period also includes the priority, the quantity of subchannels, the R-PDB, and the resource reservation period.

For another example, if the second parameter is the resource reservation period, when the first terminal device selects the multiple candidate parameter groups from the multiple parameter groups based on any parameter other than the resource reservation period, a part or all of the multiple candidate parameter groups include the resource reservation period. When the first terminal device selects the target parameter group from the multiple candidate parameter groups based on the resource reservation period, the target parameter group includes the priority, the quantity of subchannels, the R-PDB, and the resource reservation period.

In another example, if each of the multiple parameter groups includes the first parameter, and a part of the multiple parameter groups include the second parameter, the first terminal device determines a first parameter group from the multiple parameter groups based on the first parameter, where a value of a first parameter in the first parameter group meets a fourth preset condition, and the first parameter group does not include a second parameter; the first terminal device determines a target second parameter from the part of parameter groups based on the second parameter, where a value of the target second parameter meets a fifth preset condition; and the first terminal device determines the target parameter group based on the first parameter group and the target second parameter.

In other words, when the part of the multiple parameter groups include the second parameter, and a part of parameter groups do not include the second parameter, the first terminal device may determine, based on the first parameter, a parameter group from multiple parameter groups that do not include the second parameter, and then determine a value of the second parameter based on values of the second parameters in the parameter groups that include the second parameter. The first terminal device determines the target parameter group based on the selected parameter group that does not include the second parameter and the value of the second parameter. In this way, an appropriate resource set can be selected based on different data requirements.

In this embodiment of this application, the target parameter group includes all parameters included in a second parameter group, values corresponding to all the parameters, the target second parameter, and the value corresponding to the target second parameter.

In some embodiments, the fourth preset condition includes: The value of the first parameter in the first parameter group is greater than or less than a value of a first parameter in a parameter group other than the first parameter group in the multiple parameter groups, or is closest to an average value of first parameters in the multiple parameter groups.

In some embodiments, the fourth preset condition includes: The value of the first parameter in the first parameter group is greater than or less than a value of a first parameter in a parameter group that does not include the second parameter in the multiple parameter groups, or is closest to an average value of first parameters in parameter groups that do not include the second parameter in the multiple parameter groups.

In some embodiments, the fifth preset condition includes: The value of the target second parameter is a largest value or a smallest value in second parameters included in the part of parameter groups, or is closest to an average value of the second parameters included in the part of parameter groups, or is an average value of the second parameters included in the part of parameter groups.

In some embodiments, the first parameter is one of the priority, the quantity of subchannels, and the R-PDB, and the second parameter is the resource reservation period.

For ease of understanding, the following uses an example for description with reference to a specific parameter.

By way of example and not limitation, a part of the multiple parameter groups include the priority, the quantity of subchannels, and the R-PDB, and the other part of the multiple parameter groups include the priority, the quantity of subchannels, the R-PDB, and the resource reservation period.

For example, the first parameter is the priority, and the second parameter is the resource reservation period. The first terminal device may determine a first parameter group from a part of the multiple parameter groups based on the first parameter, determine a target second parameter based on second parameters included in the other part of the multiple parameter groups, and then combine the first parameter group and the target second parameter into a target parameter group. The target parameter group includes all parameters in the first parameter group, values corresponding to all the parameters, the target second parameter, and the value corresponding to the target second parameter.

In still another implementation, the first terminal device may determine a value of a first parameter in the target parameter group based on values of first parameters in the multiple parameter groups. The first parameter may be any one of the priority, the quantity of subchannels, the R-PDB, and the resource reservation period.

In other words, the first terminal device may separately determine a value of each parameter in the target parameter group at a granularity of a parameter, to obtain the target parameter group. In this way, data transmission requirements of the data in the multiple processes may be comprehensively considered, to determine the target parameter group that better meets the requirements of the multiple processes.

In an example, the value of the first parameter in the target parameter group is the value of the first parameter in the first parameter group in the multiple parameter groups.

In other words, the value of the first parameter in the target parameter group may be a value of a first parameter in one of the multiple parameter groups. For example, the value of the first parameter in the first parameter group may be a largest value or a smallest value in the first parameters in the multiple parameter groups, or is closest to an average value of first parameters in a part or all of the multiple parameter groups.

The value of the first parameter in the target parameter group may be directly a value in the first parameters included in the multiple parameter groups, so that a highest or lowest requirement of different processes on the parameter is met for selection, and accuracy of resource set selection is improved.

For ease of understanding, an example is provided. If the target parameter group includes the priority, the quantity of subchannels, the R-PDB, and the resource reservation period, a value of the priority in the target parameter group may be a largest value or a smallest value of priorities included in the multiple parameter groups, or is closest to an average value of priorities; a value of the quantity of subchannels in the target parameter group may be a largest value or a smallest value of quantities of subchannels included in the multiple parameter groups, or is closest to an average value of quantities of subchannels; a value of the R-PDB in the target parameter group may be a largest value or a smallest value of R-PDBs included in the multiple parameter groups, or is closest to an average value of R-PDBs; and a value of the resource reservation period in the target parameter group may be a largest value or a smallest value of resource reservation periods included in the multiple parameter groups, or is closest to an average value of resource reservation periods.

In another example, the value of the first parameter in the target parameter group is obtained through calculation based on first parameters in one or more of the multiple parameter groups. For example, the value of the first parameter in the target parameter group is an average value of the first parameters in the one or more of the multiple parameter groups.

The value of the first parameter in the target parameter group may be the average value of the first parameters included in the multiple parameter groups, so that a common requirement of different processes on the parameter is met for selection, and accuracy of resource set selection is improved.

For ease of understanding, an example is provided. If the target parameter group includes the priority, the quantity of subchannels, the R-PDB, and the resource reservation period, a value of the priority in the target parameter group may be an average value of priorities of one or more parameter groups, a value of the R-PDB in the target parameter group may be an average value of R-PDBs of the one or more parameter groups, and a value of the resource reservation period in the target parameter group may be an average value of resource reservation periods of the one or more parameter groups.

It should be noted that the average value in this embodiment of this application may be an absolute average value (that is, an actual value obtained through calculation by using original data), or a rounded average value (that is, a value obtained after the absolute average value is rounded). When the average value is the rounded average value, during actual calculation, the absolute average value may be rounded up to obtain the rounded average value, or the absolute average value may be rounded down to obtain the rounded average value, which may be specifically determined based on an actual requirement. This is not limited in this embodiment of this application.

In conclusion, the first terminal device may determine the target parameter group in the following manners.

In an implementation, the first terminal device may directly select a parameter group (for example, the first parameter group) from the multiple parameter groups as the target parameter group. In this way a parameter that meets a data transmission requirement of the multiple processes can be quickly found at low costs. This is simple and efficient.

For example, the first terminal device may select the target parameter group based on at least one parameter in the priority, the quantity of subchannels, the R-PDB, and the resource reservation period, and a type of a parameter included in the target parameter group needs to be the same as a type of a parameter included in a parameter group having a largest quantity of parameter types in the multiple parameter groups.

In another implementation, the first terminal device may comprehensively consider all parameters in the multiple parameter groups, and separately determine a value of each parameter, to form the target parameter group. In this way, data transmission requirements of the data in the multiple processes may be comprehensively considered, to determine the target parameter group that meets the requirements of the multiple processes.

In still another implementation, the first terminal device may determine, by selecting a parameter group and calculating a value of the first parameter, values of all parameters included in the target parameter group. The selected parameter group does not include the first parameter. In this way, an appropriate resource set may be selected based on different data requirements.

In some embodiments, before step S310, the method 300 may further include:

The first terminal device determines the multiple processes based on the resource reservation period, where data in a process corresponding to a parameter group including the resource reservation period is periodic data, and data in a process corresponding to a parameter group not including the resource reservation period is aperiodic data.

In other words, the first terminal device may first classify processes of to-be-transmitted data. In this way, the data in the multiple processes transmitted by the first terminal device in the multiple consecutive time units is periodic data or aperiodic data. Correspondingly, in the multiple parameter groups that are in one-to-one correspondence with the multiple processes, each parameter group includes a parameter of a same type.

For example, when the data in the multiple processes is the periodic data, a parameter group corresponding to each of the multiple processes includes the resource reservation period. That is, each parameter group includes the priority, the quantity of subchannels, the R-PDB, and the resource reservation period.

For another example, when the data in the multiple processes is the aperiodic data, a parameter group corresponding to each of the multiple processes does not include the resource reservation period. That is, each parameter group includes the priority, the quantity of subchannels, and the R-PDB.

In this way, because types of parameters included in any two of the multiple parameter groups are the same, in step S320, if the first terminal device selects a parameter group from the multiple parameter groups as the target parameter group, it is simple and quick.

In some embodiments, before step S310, the method 300 may further include:

The first terminal device determines the multiple processes based on the R-PDB.

In other words, the first terminal device may first classify processes of to-be-transmitted data, so that R-PDBs of the data in the multiple processes transmitted in the multiple consecutive time units meet a specific condition, and the candidate resource set corresponding to the determined target parameter group can better adapt to the data requirements of the multiple processes.

In some embodiments, an absolute value of a difference between an R-PDB of a first process in the multiple processes and an R-PDB of each of other processes than the first process in the multiple processes is less than or equal to a first threshold.

Herein, the first process may be any one of the multiple processes.

By way of example and not limitation, the first terminal device includes N processes, and the first terminal device may randomly select a process from the N processes as the first process. Based on the R-PDB of the first process, the first terminal device may calculate an absolute value of a difference between an R-PDB of each of the N processes and the R-PDB of the first process, and classify processes whose absolute values of differences are less than or equal to the first threshold into one type, that is, determine the multiple processes in step S310.

In some embodiments, the first threshold may be configured by a network device for the first terminal device, or the first threshold is preconfigured for the first terminal device. For example, if the first threshold is configured by the network device, the first threshold may be carried in an RRC message or a SIB.

The first threshold may be configured in a direct or indirect manner. For example, the first threshold may be a configured specific value (for example, four milliseconds), and is a difference between a maximum R-PDB and a minimum R-PDB in the multiple processes. For another example, the first threshold is indirectly determined based on a configured change range. For example, if the network device configures or the first terminal device is pre-configured with the change range of ±2 milliseconds, the first threshold is four milliseconds.

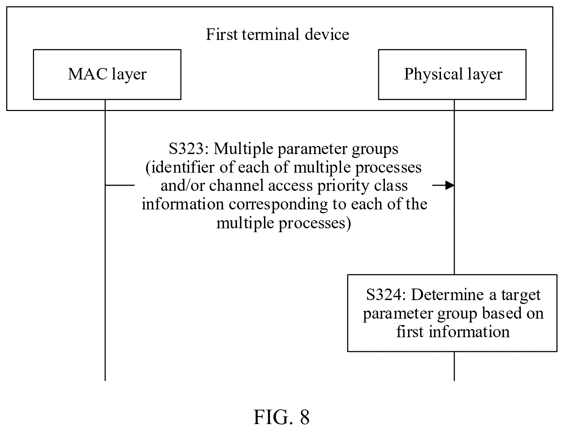

In this embodiment of this application, the first terminal device includes a physical layer and a MAC layer. Step S320 in the method 300 may be performed by the physical layer, or may be performed by the MAC layer. The following provides detailed descriptions with reference to FIG. 7 and FIG. 8.

As shown in FIG. 7, step S320 is performed by the MAC layer, and step S320 may specifically include the following step.

S321: The MAC layer determines the target parameter group based on the first information.

The MAC layer may determine the target parameter group in any manner of determining the target parameter group described in step S320. For details, refer to the foregoing related descriptions. For brevity, details are not described herein again.

The method 300 further includes the following step.

S322: The MAC layer sends the target parameter group to the physical layer, where the target parameter group is used by the physical layer to obtain a candidate resource set, and the candidate resource set is used to determine the resource locations of the multiple consecutive time units.

In some embodiments, the method 300 may further include: The MAC layer sends target channel access priority class information corresponding to the target parameter group to the physical layer, where the target channel access priority class information is used by the physical layer to perform listen-before-talk LBT.

Generally, there is a correspondence between a channel access priority class (channel access priority class, CAPC) and a CAPC value. For example, in some scenarios, a higher CAPC corresponds to a lower CAPC value, and a lower CAPC value represents a higher-class CAPC. A lower CAPC class represents a lower probability of accessing a channel but a longer preempted maximum COT. A higher CAPC class represents a higher probability of accessing a channel but a shorter preempted maximum COT.

In this embodiment of this application, the target channel access priority class information corresponding to the target parameter group may be a CAPC class or a CAPC value.

In some embodiments, the target channel access priority class information may include channel access priority class information corresponding to a process with a highest or lowest channel access priority class in the multiple processes.

Alternatively, it is understood that a channel access class corresponding to the target parameter group may be a highest or lowest channel access class in the multiple processes.

In some embodiments, the method 300 may further include: The MAC layer sends an identifier of each of the multiple processes to the physical layer, where there is a correspondence between the identifier of each of the multiple processes and the target parameter group.

There is the correspondence between the identifier of each of the multiple processes and the target parameter group. Correspondingly, both the candidate resource set determined based on the target parameter group and the resource locations of the multiple consecutive time units determined based on the candidate resource set have a correspondence with the identifier of each of the multiple processes.

In this embodiment of this application, the correspondence between the target parameter group (or the candidate resource set, or the resource locations of the multiple consecutive time units) and the identifier of each of the multiple processes is established, so that the MAC layer can learn of, in a case of process grouping, specific processes whose data is sent in the multiple consecutive time units.

As shown in FIG. 8, step S320 is performed by the physical layer, and step S320 may specifically include the following steps.

S323: The MAC layer sends the multiple parameter groups to the physical layer.

S324: The physical layer determines the target parameter group based on the first information, where the target parameter group is used by the physical layer to obtain a candidate resource set, and the candidate resource set is used to determine the resource locations of the multiple consecutive time units.

In some embodiments, the method 300 may further include: The MAC layer sends channel access priority class information corresponding to each of the multiple processes to the physical layer, where the channel access priority class information corresponding to each of the multiple processes is used to determine target channel access priority class information corresponding to the target parameter group, and the target channel access priority class information is used by the physical layer to perform listen-before-talk LBT.

In this embodiment of this application, each process is corresponding to one CAPC class. After the MAC layer sends the CPAC information corresponding to each process to the physical layer, the physical layer may determine the target channel access priority class information based on the CAPC information corresponding to each process.

In some embodiments, the target channel access priority class information may include channel access priority class information corresponding to a process with a highest or lowest channel access priority class in the multiple processes.

In some embodiments, the method 300 may further include: The MAC layer sends an identifier of each of the multiple processes to the physical layer, where there is a correspondence between the identifier of each of the multiple processes and the target parameter group.

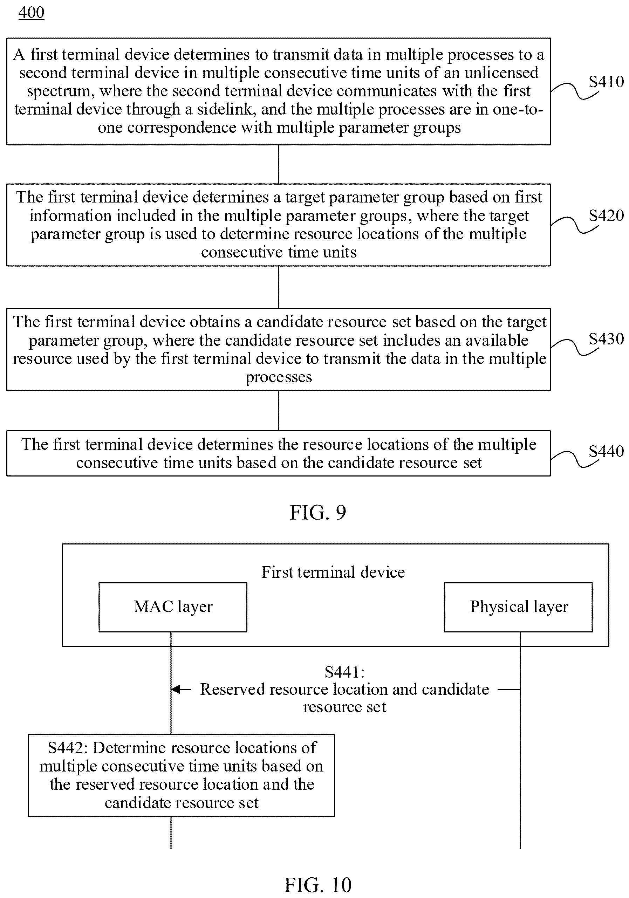

FIG. 9 is a schematic flowchart of a resource selection method according to an embodiment of this application. As shown in FIG. 9, the method 400 includes step S410 to step S440.

S410: A first terminal device determines to transmit data in multiple processes to a second terminal device in multiple consecutive time units of an unlicensed spectrum. The second terminal device communicates with the first terminal device through a sidelink. The multiple processes are in one-to-one correspondence with multiple parameter groups.

S420: The first terminal device determines a target parameter group based on first information included in the multiple parameter groups, where the target parameter group is used to determine resource locations of the multiple consecutive time units.

Steps S410 and S420 are the same as steps S310 and S320 in the method 300 shown in FIG. 6. For details, refer to the foregoing related descriptions. For brevity, details are not described herein again.

S430: The first terminal device obtains a candidate resource set based on the target parameter group, where the candidate resource set includes an available resource used by the first terminal device to transmit the data in the multiple processes.

In this step, the first terminal device may perform resource sensing and resource selection based on each parameter in the target parameter group, to obtain the candidate resource set.

The first terminal device determines, by using a resource sensing process, a resource reserved by another terminal device, and performs interference avoidance. The first terminal device may sense SL resource usage and a resource reservation status of the another terminal device by sensing SCI sent by the another terminal device. More specifically, the first terminal device needs to continuously receive data. When the resource selection process is triggered, the first terminal device needs to perform blind detection on a PSCCH in the resource sensing window to obtain a resource sensing result, and determine, based on the resource sensing result, a resource reservation status in a future period of time, that is, the resource selection window, to exclude an unavailable candidate resource in the resource selection window.

If the target parameter group includes the priority, the quantity of subchannels, and the R-PDB, in the resource selection process, the first terminal device may determine a location of the resource selection window in time domain based on the R-PDB, may determine a location of the resource selection window in frequency domain based on the quantity of subchannels, and may determine, based on the priority, whether a resource location reserved by another terminal device in the resource selection window can be preempted. If the target parameter group further includes the resource reservation period, the first terminal device may further determine, based on the resource reservation period, a time interval in which the first terminal device occupies a resource in a specific time range.

The first terminal device uses a resource location other than the resource location reserved by the another terminal device in the resource selection window as a resource location available to the first terminal device. Actually, these resource locations may be used by the first terminal device to transmit data in a process and a sidelink synchronization signal block (that is, an SL SSB) corresponding to the first terminal device. After the first terminal device excludes, from these available resource locations, a resource location used to send the SL SSB, a remaining resource location may be used by the first terminal device to transmit the data in the process. A set of these remaining resource locations is a candidate resource set. In other words, the candidate resource set is resource locations other than the resource location reserved by the another terminal device and the resource location used by the first terminal device to send the SL SSB in the resource selection window.

A physical side broadcast channel (physical sidelink broadcast channel, PSBCH) is used for transmission of the SL SSB. Currently, the physical layer learns of the resource location of the SL SSB, and the MAC layer does not sense the resource location. A CAPC value of the SL SSB may be configurable (for example, configured by the network device by using an RRC message or an SIB), or may be fixed.

S440: The first terminal device determines the resource locations of the multiple consecutive time units based on the candidate resource set.

In an implementation, all the resource locations of the multiple consecutive time units are used to transmit the data in the multiple processes. That is, the resource locations of the multiple consecutive time units correspond to initial transmission and/or retransmission of the data in the multiple processes.

Because the candidate resource set includes an available resource used by the first terminal device to transmit the data in the multiple processes, the first terminal device may select, from the candidate resource set, multiple consecutive time units in time domain, that is, the multiple consecutive time units.

In another implementation, a part of the multiple consecutive time units are used to transmit the data in the multiple processes, and a rest of the multiple consecutive time units are used to transmit data of a terminal device other than the first terminal device and/or an SL SSB corresponding to the first terminal device.

For example, the first terminal device may share the multiple consecutive time units with another terminal device, or the first terminal device uses the multiple consecutive time units to transmit the data in the process and the SL SSB.

In this way, when the first terminal device selects a transmission resource for the data in the multiple processes, there is larger selection space. In addition, a COT sharing mechanism is used to select consecutive time units, which is more efficient and flexible.

In some embodiments, step S440 may specifically include: The first terminal device determines the resource locations of the multiple consecutive time units based on a reserved resource location and the candidate resource set, where the reserved resource location is used to transmit data of a terminal device other than the first terminal device and/or a sidelink synchronization signal block corresponding to the first terminal device.

By way of example and not limitation, step S440 may specifically include: The first terminal device determines a relative location relationship between the reserved resource location and the candidate resource set in time domain, where the reserved resource location includes M time units, and M is greater than or equal to 1. The first terminal device determines, in the candidate resource set based on the relative location relationship, resource locations of N time units near the reserved resource location, where Q time units in the M time units are located between a 1^{st} time unit in the N time units and a last time unit in the N time units, the N time units are used to transmit the data in the multiple processes, the N time units and the Q time units are consecutive in time domain, Q is less than or equal to M, and N is greater than 1. The first terminal device determines the resource locations of the multiple consecutive time units based on resource locations of the N time units and resource locations of the Q time units.

In other words, a quantity of time units in the multiple consecutive time units is N+Q. The N time units are in the candidate resource set and are used to transmit the data in the multiple processes. The Q time units are the reserved resource location and are used to transmit the data of the terminal device other than the first terminal device and/or the sidelink synchronization signal block corresponding to the first terminal device.

Herein, resource locations of the M time units and resource locations of time units in the candidate resource set are consecutive in time domain.

In this embodiment of this application, the multiple consecutive time units determined by the first terminal device in step S440 are an unlicensed spectrum resource. Therefore, after step S440, before the first terminal device sends the data in the multiple processes on a corresponding resource, the first terminal device further needs to perform LBT, to ensure fairness of accessing a channel by each type of terminal devices.

Specifically, in an SL-U communication scenario, a transmission resource is shared by terminal devices in multiple forms. For example, a terminal device that uses an SL communication technology (which may be referred to as an SL UE for short), a terminal device that uses a Wi-Fi technology for communication (which may be referred to as a Wi-Fi UE for short), a terminal device that uses a Bluetooth technology for communication (which may be referred to as a Bluetooth UE for short), and a terminal device that uses a Zigbee technology for communication (which may be referred to as a Zigbee UE for short) all transmit a signal on an unlicensed spectrum resource. The Wi-Fi UE, the Bluetooth UE, and the Zigbee UE may be collectively referred to as an inter-system UE relative to the SL UE. Communication on the unlicensed spectrum needs to comply with some regulations, for example, an LBT requirement. Before transmitting data on the unlicensed spectrum resource, the first terminal device (that is, the SL UE) needs to first perform LBT, to sense whether a to-be-used transmission resource is occupied by an inter-system UE.

In this embodiment of this application, the first terminal device selects a group of parameters based on the multiple parameter groups, and then selects, based on the group of parameters, a candidate resource set that is appropriate for the multiple processes, to determine the multiple consecutive time units, so that continuous data can be transmitted in the multiple consecutive time units. In addition, because the first terminal device transmits the data in the multiple consecutive time units, type1 LBT can be reduced, and an access success rate can be increased, to improve SL-U transmission efficiency.

In this embodiment of this application, the first terminal device includes a physical layer and a MAC layer, and step S440 may be performed by the physical layer, or may be performed by the MAC layer. The following provides detailed descriptions with reference to FIG. 10 to FIG. 12.

FIG. 10 to FIG. 12 are schematic interaction diagrams of a resource selection method according to an embodiment of this application.

As shown in FIG. 10, step S440 is performed by a MAC layer, and step S440 may specifically include the following steps.

S441: A physical layer sends a reserved resource location and a candidate resource set to the MAC layer.

S442: The MAC layer determines resource locations of multiple consecutive time units based on the reserved resource location and the candidate resource set.

In some embodiments, the method 400 may further include: The physical layer sends channel access priority class information corresponding to the reserved resource location to the MAC layer.

In this embodiment of this application, the channel access priority class information corresponding to the reserved resource location is used to determine specific processes, in multiple processes, whose data is continuously sent with data (or a signal) corresponding to the reserved resource location.

In this embodiment of this application, when the multiple consecutive time units are used to transmit data in the multiple processes and other data, to meet an LBT requirement, a channel access priority class corresponding to each of the multiple processes is not lower than a channel access priority class corresponding to the reserved resource location.

More specifically, when process data of a first terminal device shares the multiple consecutive time units with data of a reserved resource, the first terminal device needs to perform LBT based on a CAPC value corresponding to the reserved resource location. To enable a COT sharing mechanism between SL UEs to comply with legal and regulatory requirements of an unlicensed spectrum, a CAPC priority of a process or a TB sent by the first terminal device cannot be lower than a CAPC priority of a reserved resource (for example, a resource reserved by another terminal device or an SSB resource).

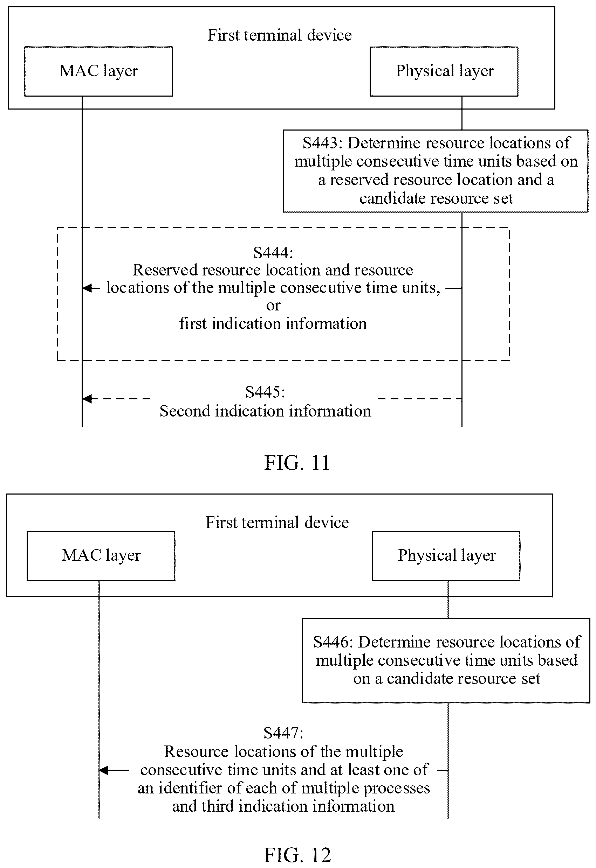

As shown in FIG. 11, step S440 is performed by a physical layer, and step S440 may specifically include the following steps.

S443: The physical layer determines resource locations of multiple consecutive time units based on a reserved resource location and a candidate resource set.

S444: The physical layer sends the reserved resource location and the resource locations of the multiple consecutive time units to a MAC layer, or sends first indication information to the MAC layer, where the first indication information indicates a resource location of a time unit occupied by the MAC layer to transmit data in multiple processes.

In this way, the MAC may learn of, based on the reserved resource location and the resource locations of the multiple consecutive time units, specific time units in the multiple consecutive time units being the reserved resource location and specific time units being resource locations used to transmit the data in the multiple processes.

Alternatively, the physical layer may send the first indication information to the MAC layer, where the first indication information may indicate the resource location of the time unit occupied by the data in the multiple processes.

In some embodiments, the method 400 may further include the following step.

S445: The physical layer sends second indication information to the MAC layer, where the second indication information indicates a correspondence between the multiple processes and the time unit used to transmit the data in the multiple processes in the multiple consecutive time units.

Herein, the physical layer may use the second indication information to indicate, to the MAC layer, a specific time unit in which data in a specific process is transmitted. For example, the second indication information may include a correspondence between a process identifier of a corresponding process and the time unit used to transmit the data in the multiple processes in the multiple consecutive time units.

As shown in FIG. 12, step S440 is performed by a physical layer, and step S440 may specifically include the following steps.

S446: The physical layer determines resource locations of multiple consecutive time units based on a candidate resource set, where the multiple consecutive time units are used for initial transmission and/or retransmission of data in multiple processes.

S447: The physical layer sends the resource locations of the multiple consecutive time units and at least one of an identifier of each of the multiple processes and third indication information to a MAC layer, where the third indication information indicates a correspondence between the multiple consecutive time units and the data in the multiple processes.

In this example, the multiple consecutive time units determined by the physical layer are all used to transmit data in a process. The physical layer may send the resource locations of the multiple consecutive time units to the MAC layer, so that the MAC layer learns of the resource locations of the multiple consecutive time units used to send the data in the process.

In some embodiments, the physical layer may further send the identifier of each of the multiple processes to the MAC layer, so that the MAC layer learns of specific processes whose data is sent in the multiple consecutive time units.

In some embodiments, the physical layer may further send the third indication information to the MAC layer, to indicate a correspondence between each of the multiple consecutive time units and a process (which may be specifically a process identifier) to the MAC layer.

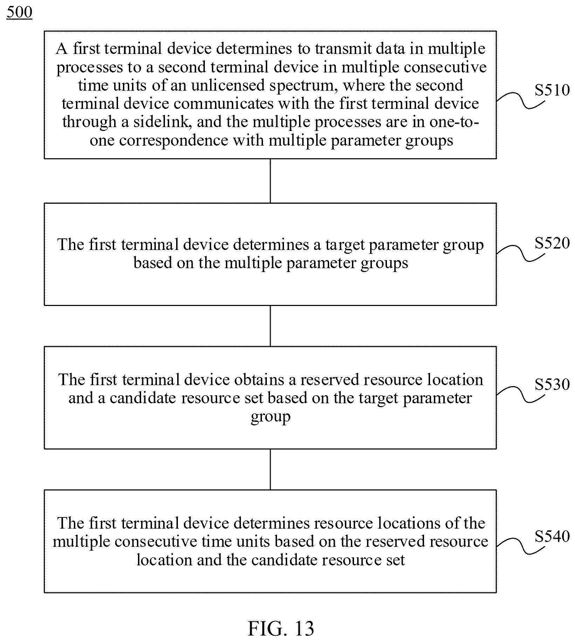

FIG. 13 is a schematic flowchart of a resource selection method according to an embodiment of this application. As shown in FIG. 13, the method 500 includes step S510 to step S540.

S510: A first terminal device determines to transmit data in multiple processes to a second terminal device in multiple consecutive time units of an unlicensed spectrum. The second terminal device communicates with the first terminal device through a sidelink. The multiple processes are in one-to-one correspondence with multiple parameter groups.

Step S510 is the same as step S310 in the method 300 shown in FIG. 6. For details, refer to the foregoing related descriptions. For brevity, details are not described herein again.

S520: The first terminal device determines a target parameter group based on the multiple parameter groups, where the target parameter group is used to determine resource locations of the multiple consecutive time units.

In this embodiment of this application, the target parameter group is determined based on the multiple parameter groups. A manner of determining the target parameter group is not limited in this embodiment of this application. The manner described in the method 300 may be used, or another manner may be used. For example, a group of parameters is randomly selected as the target parameter group, or values of parameters in the multiple parameter groups are randomly selected as values of corresponding parameters in the target parameter group.

S530: The first terminal device obtains a reserved resource location and a candidate resource set based on the target parameter group.

The reserved resource location is used to transmit data of a terminal device other than the first terminal device and/or a sidelink synchronization signal block corresponding to the first terminal device, and the candidate resource set includes an available resource used by the first terminal device to transmit the data in the multiple processes.

S540: The first terminal device determines the resource locations of the multiple consecutive time units based on the reserved resource location and the candidate resource set.

Apart of the multiple consecutive time units are used to transmit the data in the multiple processes, and a rest of the multiple consecutive time units are used to transmit the data of the terminal device other than the first terminal device and/or the SL SSB corresponding to the first terminal device.

For descriptions of step S540, refer to related content descriptions of "multiple consecutive time units are not all used to transmit data in multiple processes" in an implementation of step S440 in the method 400. For brevity, details are not described herein again.

In some embodiments, some embodiments related to the reserved location described in FIG. 9 to FIG. 11 may be applied to the method 500. For details, refer to the foregoing related descriptions. Details are not described herein again.

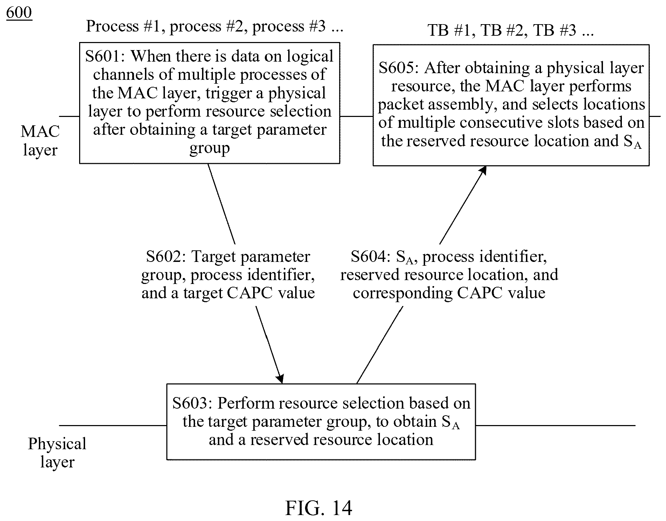

The foregoing describes, with reference to FIG. 6 to FIG. 13, the resource selection method provided in embodiments of this application. For ease of understanding, the following describes in more detail some specific but not limitative examples of embodiments of this application with reference to FIG. 14 to FIG. 16. In FIG. 14 to FIG. 16, an example in which a time unit is a slot and multiple consecutive time units are not all used to transmit data in multiple processes is used.

As shown in FIG. 14, in this embodiment, a MAC layer determines multi-consecutive slots transmission. Specifically, to implement multi-consecutive slots transmission, the MAC layer needs to select a group of parameters (that is, a target parameter group) for multiple processes simultaneously, and then a physical layer selects a resource candidate set for the multiple processes based on the group of parameters.

The method 600 shown in FIG. 14 may include step S601 to step S605.

S601: When there is data on logical channels of the multiple processes of the MAC layer, the MAC layer triggers the physical layer to perform resource selection after obtaining the target parameter group.

For example, the multiple processes may include three processes, for example, a process #1, a process #2, and a process #3.

S602: The MAC layer sends the target parameter group to the physical layer.

Optionally, the MAC layer may further carry a process identifier (for example, a process number) and a target CAPC value with the target parameter group. Herein, the process identifier includes an identifier of each of the multiple processes, and the process identifier is used to establish a correspondence with the target parameter group (or a candidate resource set, or multiple consecutive slots). The target CAPC value corresponds to the target parameter group, and is used by the physical layer to perform LBT.

S603: The physical layer performs resource selection based on the target parameter group, to obtain a candidate resource set S_{A} and a reserved resource location.

For example, the reserved resource location may include a reserved resource location of another terminal device and/or a resource location of an SL-SSB.

S604: The physical layer sends the candidate resource set S_{A} and the reserved resource location to the MAC layer.

Optionally, the physical layer may further send a CAPC value corresponding to the reserved resource location to the MAC layer.

S605: After obtaining a physical layer resource, the MAC layer performs packet assembly, and selects locations of the multiple consecutive slots based on the reserved resource location and S_{A}.

Optionally, a CAPC value in a process of the MAC layer cannot be greater than a CAPC value of a reserved resource of the another terminal device and a CAPC value of an SL-SSB.

After obtaining a resource used to send process data, the MAC layer may perform packet assembly based on a size of the resource. Specifically, one process generates one TB, and the TB is sent in one slot. For example, three processes generate three TBs, for example, a TB #1, a TB #2, and a TB #3.

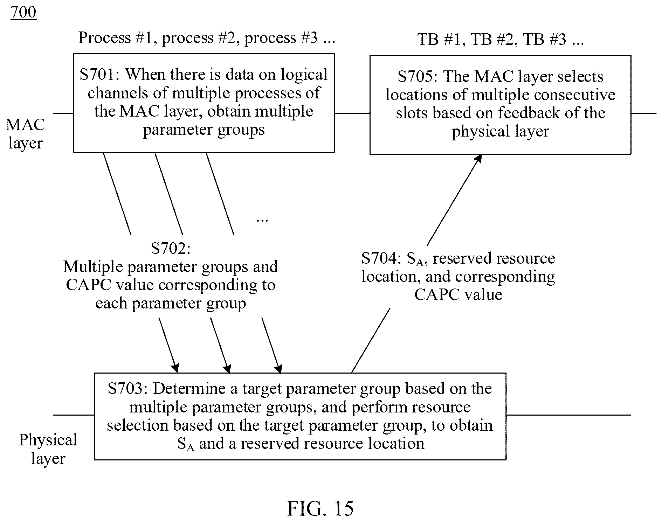

As shown in FIG. 15, in this embodiment, a physical layer determines multi-consecutive slots transmission. Specifically, to implement multi-consecutive slots transmission, the physical layer needs to select a group of parameters (that is, a target parameter group) for multiple processes simultaneously, and then a physical layer selects a resource candidate set S_{A} for the multiple processes based on the group of parameters.

The method 700 shown in FIG. 15 may include step S701 to step S705.

S701: When there is data on logical channels of the multiple processes of a MAC layer, the MAC layer obtains multiple parameter groups.

Herein, the multiple parameter groups are in one-to-one correspondence with the multiple processes.

S702: The MAC layer sends the multiple parameter groups to the physical layer.

For example, the MAC layer may send the multiple parameter groups to the physical layer separately, or send the multiple parameter groups to the physical layer at a time.

Optionally, the MAC layer may further carry a process identifier and a CAPC value corresponding to each process.

S703: The physical layer determines the target parameter group based on the multiple parameter groups, and performs resource selection based on the target parameter group, to obtain the candidate resource set S_{A} and a reserved resource location.

S704: The physical layer sends the candidate resource set S_{A} and the reserved resource location to the MAC layer.

Optionally, the physical layer may further send a CAPC value corresponding to the reserved resource location to the MAC layer.

S705: The MAC layer selects locations of multiple consecutive slots based on feedback of the physical layer.

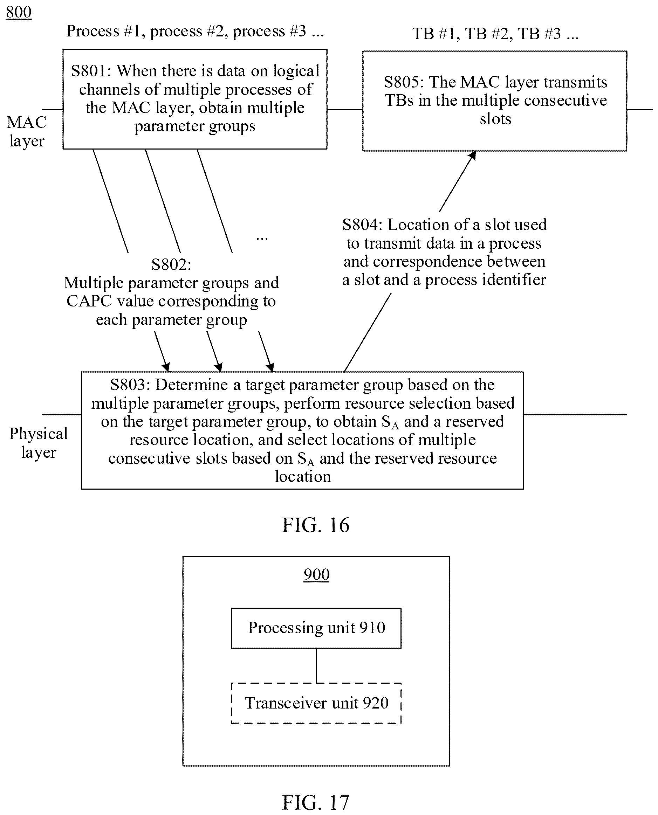

As shown in FIG. 16, in this embodiment, a physical layer determines multi-consecutive slots transmission. Specifically, to implement multi-consecutive slots transmission, the physical layer needs to select a group of parameters (that is, a target parameter group) for multiple processes simultaneously, and then a physical layer selects a resource candidate set S_{A} for the multiple processes based on the group of parameters. In addition, the physical layer selects multiple consecutive slots, and feeds back resource locations of the multiple consecutive slots to a MAC layer.

The method 800 shown in FIG. 16 may include step S801 to step S805.

S801: When there is data on logical channels of the multiple processes of the MAC layer, the MAC layer obtains multiple parameter groups.

S802: The MAC layer sends the multiple parameter groups to the physical layer.

S803: The physical layer determines the target parameter group based on the multiple parameter groups, and performs resource selection based on the target parameter group, to obtain the candidate resource set S_{A} and a reserved resource location. The physical layer selects the locations of the multiple consecutive slots based on S_{A} and the reserved resource location.

Optionally, the physical layer may further determine a correspondence between a process and a slot location, that is, determine a specific slot used to transmit data in a specific process.

S804: The physical layer sends, to the MAC layer, a location of a slot used to transmit data in a process.

In this step, the physical layer notifies the MAC layer of the location of the slot used to transmit the data in the process in the multiple slots, so that the MAC learns of specific slots in which data is transmitted.

Optionally, the physical layer may further send a correspondence between a slot and a process (which may be specifically a process identifier) to the MAC layer. The correspondence may indicate specific slots used to send data in a specific process.

S805: The MAC layer transmits TBs in the multiple consecutive slots.

Specifically, the MAC layer transmits the TBs in slots used to transmit the data in the multiple processes in the multiple consecutive slots.

It may be understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in embodiments may be mutually referenced or explained in embodiments. This is not limited.

The foregoing describes in detail the method embodiments in embodiments of this application with reference to FIG. 1 to FIG. 16, and the following describes in detail apparatus embodiments in embodiments of this application with reference to FIG. 17 to FIG. 19. It should be understood that descriptions of the method embodiments correspond to descriptions of the apparatus embodiments. Therefore, for a part that is not described in detail, refer to the foregoing method embodiments.

The apparatus provided in embodiments of this application includes a corresponding module configured to perform the foregoing method embodiments. The module may be software, hardware, or a combination of software and hardware. It may be understood that the technical features described in the method embodiments are also applicable to the following apparatus embodiments.

FIG. 17 is a block diagram of a communication apparatus according to an embodiment of this application. The communication apparatus 900 may be configured to implement functions of the terminal device in the method embodiments shown in FIG. 6 to FIG. 16.

As shown in FIG. 17, the apparatus 900 includes a processing unit 910. The processing unit 910 may be configured to process data.

Optionally, the apparatus 900 further includes a transceiver unit 920 that may be configured to implement a corresponding communication function. The transceiver unit 920 may also be referred to as a communication interface or a communication unit.

Optionally, the apparatus 900 further includes a storage unit. The storage unit may be configured to store instructions and/or data. The processing unit 910 may read the instructions and/or the data in the storage unit, to enable the apparatus to implement actions of the terminal device in the foregoing method embodiments.

In a design, the apparatus 900 may be the first terminal device in the foregoing embodiments, or may be a component (for example, a chip) of the first terminal device. The apparatus 900 may implement steps or procedures performed by the first terminal device in the foregoing method embodiments. The processing unit 910 may be configured to perform processing-related operations of the first terminal device in the foregoing method embodiments, for example, an operation of determining a target parameter group, an operation of obtaining a candidate resource set, and an operation of determining resource locations of multiple consecutive time units. The transceiver unit 920 may be configured to perform receiving and sending-related operations of the first terminal device in the foregoing method embodiments, for example, an operation of listening to SCI.

Specifically, the communication apparatus 900 shown in FIG. 17 may be configured to perform the method 300 in FIG. 6, or configured to perform the method 400 in FIG. 9, or configured to perform the method 500 in FIG. 13, and may specifically implement the embodiments shown in FIG. 7, FIG. 8, FIG. 10 to FIG. 12, and FIG. 14 to FIG. 16.

The apparatus 900 may implement the steps or the procedures performed by the first terminal device in the method embodiments in embodiments of this application. The apparatus 900 may include a unit configured to perform the method performed by the first terminal device in the embodiments shown in FIG. 6, FIG. 9, or FIG. 13.

For more detailed descriptions of the apparatus 900, directly refer to the related descriptions in the foregoing method embodiments. Details are not described herein again.

It should be understood that a specific process in which each unit performs the foregoing corresponding step is described in detail in the foregoing method embodiments. For brevity, details are not described herein.

It should be further understood that the apparatus 900 herein is embodied in a form of functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 900 may be specifically the terminal device (such as the first terminal device) in the foregoing embodiments, and may be configured to perform the procedures and/or the steps corresponding to the terminal device in the foregoing method embodiments. To avoid repetition, details are not described herein again.

The apparatus 900 in each of the foregoing solutions has a function of implementing the corresponding steps performed by the terminal device (such as the first terminal device) in the foregoing methods. The function may be implemented by hardware, or may be implemented by hardware executing corresponding software. The hardware or the software includes one or more modules corresponding to the foregoing function. For example, the transceiver unit may be replaced by a transceiver (for example, a sending unit in the transceiver unit may be replaced with a transmitter, and a receiving unit in the transceiver unit may be replaced with a receiver), and another unit, for example, the processing unit, may be replaced by a processor, to separately perform receiving and sending operations and related processing operations in the method embodiments.

It should be noted that the apparatus in FIG. 17 may be the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

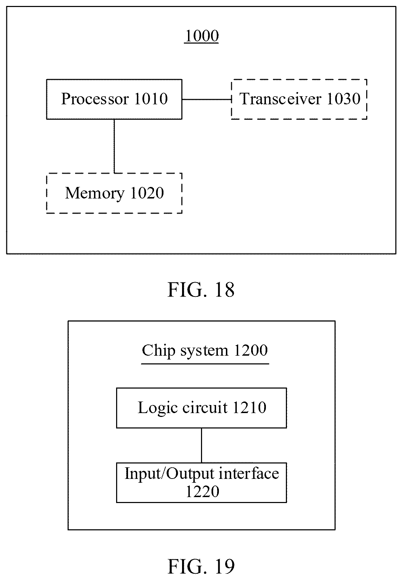

FIG. 18 is a block diagram of a communication apparatus according to an embodiment of this application.

The apparatus 1000 includes a processor 1010, and the processor 1010 is coupled to a memory 1020. Optionally, the apparatus further includes the memory 1020, configured to store a computer program or instructions and/or data. The processor 1010 is configured to execute the computer program or the instructions stored in the memory 1020, or read the data stored in the memory 1020, to perform the methods in the foregoing method embodiments.

Optionally, there are one or more processors 1010.

Optionally, there are one or more memories 1020.

Optionally, the memory 1020 and the processor 1010 are integrated together, or are disposed separately.

Optionally, as shown in FIG. 18, the apparatus 1000 further includes a transceiver 1030. The transceiver 1030 is configured to receive and/or send a signal. For example, the processor 1010 is configured to control the transceiver 1030 to receive and/or send a signal.

In a solution, the apparatus 1000 is configured to implement operations performed by the terminal device in the foregoing method embodiments.

For example, the processor 1010 is configured to execute the computer program or the instructions stored in the memory 1020, to implement related operations of the first terminal device in the foregoing method embodiments.

In an implementation process, the steps in the foregoing methods may be implemented by using a hardware integrated logic circuit in the processor 1010 or by using instructions in a form of software. The methods of the communication disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory 1020, and the processor 1010 reads information in the memory 1020 and completes the steps in the foregoing methods in combination with hardware of the processor 1010. To avoid repetition, details are not described herein again.

It should be understood that, in embodiments of this application, the processor may be one or more integrated circuits, and is configured to execute a related program, to perform the method embodiments of this application.

The processor (for example, the processor 1010) may include one or more processors and is implemented as a combination of computing devices. The processor may include one or more of the following: a microprocessor, a microcontroller, a digital signal processor (digital signal processor, DSP), a digital signal processing device (digital signal processing device, DSPD), an application-specific integrated circuit (application-specific integrated circuit, ASIC), a field programmable gate array (field programmable gate array, FPGA), a programmable logic device (programmable logic device, PLD), gate logic, transistor logic, a discrete hardware circuit, a processing circuit, other appropriate hardware or firmware, and/or another appropriate combination of hardware and software, and is configured to perform various functions described in this disclosure. The processor may be a general-purpose processor or a special-purpose processor. For example, the processor 1310 may be a baseband processor or a central processing unit. The baseband processor may be configured to process a communication protocol and communication data. The central processing unit may be configured to enable the apparatus to execute a software program and process data in the software program. A part of the processor may further include a non-volatile random access memory. For example, the processor may further store information of a device type.

The program in this application represents software in a broad sense. A non-limitative example of the software includes program code, a program, a subprogram, instructions, an instruction set, code, a code segment, a software module, an application program, a software application program, or the like. The program may be run in the processor and/or a computer, to enable the apparatus to perform various functions and/or processes described in this application.

The memory (for example, the memory 1020) may store data required by the processor (for example, the processor 1010) during software execution. The memory may be implemented by using any appropriate storage technology. For example, the memory may be any available storage medium that can be accessed by the processor and/or the computer. A non-limitative example of the storage medium includes: a random access memory (random access memory, RAM), a read-only memory (read-only memory, ROM), an electrically erasable programmable read-only memory (electrically EPROM, EEPROM), a compact disc read-only memory (Compact Disc-ROM, CD-ROM), a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), a direct rambus random access memory (direct rambus RAM, DR RAM), a removable medium, an optical disc memory, a magnetic disk storage medium, a magnetic storage device, a flash memory, a register, a status memory, a remote mounted memory, a local or remote memory component, or any other medium capable of carrying or storing software, data, or information and accessible to the processor/computer. It should be noted that the memory described in this specification aims to include but is not limited to these memories and any memory of another appropriate type.

The memory (for example, the memory 1020) and the processor (for example, the processor 1010) may be separately disposed or integrated together. The memory may be configured to be connected to the processor, so that the processor can read information from the memory, and store information in and/or write information into the memory. The memory may be integrated into the processor. The memory and the processor may be disposed in an integrated circuit (for example, the integrated circuit may be disposed in a UE or another network node).

FIG. 19 is a block diagram of a chip system 1200 according to an embodiment of this application.

The chip system 1200 (may also be referred to as a processing system) includes a logic circuit 1210 and an input/output interface (input/output interface) 1220.

The logic circuit 1210 may be a processing circuit in the chip system 1200. The logic circuit 1210 may be coupled to a storage unit, and invoke instructions in the storage unit, so that the chip system 1200 can implement the methods and functions in embodiments of this application. The input/output interface 1220 may be an input/output circuit in the chip system 1200, and outputs information processed by the chip system 1200, or inputs to-be-processed data or signaling information to the chip system 1200 for processing.

In a solution, the chip system 1200 is configured to implement operations performed by the terminal device in the foregoing method embodiments.

For example, the logic circuit 1210 is configured to implement a processing-related operation performed by the first terminal device in the foregoing method embodiments, for example, a processing-related operation performed by the first terminal device in the embodiment shown in FIG. 6, a processing-related operation performed by the first terminal device in the embodiment shown in FIG. 9, or a processing-related operation performed by the first terminal device in the embodiment shown in FIG. 13. The input/output interface 1220 is configured to implement a sending-related operation and/or a receiving-related operation performed by the first terminal device in the foregoing method embodiments.

An embodiment of this application further provides a computer-readable storage medium. The computer-readable storage medium stores computer instructions for implementing the method performed by the terminal device (such as the first terminal device) in the foregoing method embodiments.

An embodiment of this application further provides a computer program product, including instructions. When the instructions are executed by a computer, the method performed by the terminal device (such as the first terminal device) in the foregoing method embodiments is implemented.

An embodiment of this application further provides a communication system. The communication system includes the first terminal device and the second terminal device in the foregoing embodiments.

For explanations and beneficial effect of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may or may not be physical units, and may be located in one position, or may be distributed on a plurality of network units. Some or all of the units may be selected based on actual requirements to implement the solutions provided in this application.

In addition, functional units in embodiments of this application may be integrated into one unit, each of the units may exist alone physically, or two or more units may be integrated into one unit.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

When software is used to implement embodiments, all or some of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. For the computer-readable storage medium, refer to the foregoing descriptions.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A resource selection method, applied to a first terminal device and comprising:
determining to transmit data in multiple processes to a second terminal device in multiple consecutive time units of an unlicensed spectrum, wherein the second terminal device communicates with the first terminal device through a sidelink, and the multiple processes are in one-to-one correspondence with multiple parameter groups; and
determining a target parameter group based on first information comprised in the multiple parameter groups, wherein the target parameter group is used to determine resource locations of the multiple consecutive time units, and the first information comprises one or more of a priority, a quantity of subchannels, a remaining packet delay budget, and a resource reservation period.

2. The method according to claim 1, wherein the determining a target parameter group based on first information comprised in the multiple parameter groups comprises:
determining the target parameter group based on a first parameter in the first information, wherein the first parameter is one of the priority, the quantity of subchannels, the remaining packet delay budget, and the resource reservation period.

3. The method according to claim 2, wherein the determining the target parameter group based on a first parameter in the first information comprises:
determining, based on a value of the first parameter, that a first parameter group in the multiple parameter groups is the target parameter group, wherein a value of the first parameter in the first parameter group is greater than or less than a value of the first parameter in a parameter group other than the first parameter group in the multiple parameter groups, or is closest to an average value of the first parameters in the multiple parameter groups.

4. The method according to claim 3, wherein a part of the multiple parameter groups comprise the first parameter, and the first parameter is the resource reservation period.

5. The method according to claim 2, wherein the determining the target parameter group based on a first parameter in the first information comprises:
determining the target parameter group based on the first parameter and a second parameter in the first information, wherein the second parameter is one of the priority, the quantity of subchannels, the remaining packet delay budget, and the resource reservation period, and the first parameter is different from the second parameter.

6. The method according to claim 5, wherein the determining the target parameter group based on the first parameter and a second parameter in the first information comprises:
determining multiple candidate parameter groups from the multiple parameter groups based on the first parameter; and
selecting the target parameter group from the multiple candidate parameter groups based on the second parameter, wherein
a value of the first parameter in each of the multiple candidate parameter groups is greater than or less than a value of the first parameter in a parameter group other than the multiple candidate parameter groups in the multiple parameter groups, or is closest to an average value of the first parameters in the multiple parameter groups; and
a value of the second parameter in the target parameter group is greater than or less than a value of the second parameter in a parameter group other than the target parameter group in the multiple candidate parameter groups, or is closest to an average value of the second parameters in the multiple candidate parameter groups.

7. The method according to any one of claims 3, 5, and 6, wherein types of parameters comprised in any two of the multiple parameter groups are the same.

8. The method according to claim 5 or 6, wherein the first parameter or the second parameter is the resource reservation period; or the first parameter is one of the priority and the remaining packet delay budget, and the second parameter is the other one of the priority and the remaining packet delay budget.

9. The method according to claim 5, wherein each of the multiple parameter groups comprises the first parameter, a part of the multiple parameter groups comprise the second parameter, and the determining the target parameter group based on the first parameter and a second parameter in the first information comprises:
determining a first parameter group from the multiple parameter groups based on the first parameter, wherein a value of the first parameter in the first parameter group is greater than or less than a value of the first parameter in a parameter group other than the first parameter group in the multiple parameter groups, or is closest to an average value of the first parameters in the multiple parameter groups, and the first parameter group does not comprise the second parameter;
determining a target second parameter from the part of parameter groups based on the second parameter, wherein a value of the target second parameter is a largest value or a smallest value in the second parameters comprised in the part of parameter groups or an average value of the second parameters comprised in the part of parameter groups, or a value of the target second parameter is closest to an average value of the second parameters comprised in the part of parameter groups; and
determining the target parameter group based on the first parameter group and the target second parameter, wherein the target parameter group comprises all parameters comprised in the second parameter group, values corresponding to all the parameters, the target second parameter, and the value corresponding to the target second parameter.

10. The method according to claim 9, wherein the first parameter is one of the priority, the quantity of subchannels, and the remaining packet delay budget, and the second parameter is the resource reservation period.

11. The method according to claim 2, wherein the target parameter group comprises the first parameter, and the determining the target parameter group based on a first parameter in the first information comprises:
determining a value of the first parameter in the target parameter group based on values of the first parameters in the multiple parameter groups.

12. The method according to claim 11, wherein the value of the first parameter in the target parameter group is a value of the first parameter in a first parameter group in the multiple parameter groups, and the value of the first parameter in the first parameter group is a largest value or a smallest value in the first parameters in the multiple parameter groups, or is closest to an average value of the first parameters in a part or all of the multiple parameter groups; or
the value of the first parameter in the target parameter group is an average value of the first parameters in one or more of the multiple parameter groups.

13. The method according to any one of claims 1 to 12, wherein before the determining to transmit data in multiple processes to a second terminal device in multiple consecutive time units of an unlicensed spectrum, the method further comprises:
determining the multiple processes based on the resource reservation period, wherein data in a process corresponding to a parameter group comprising the resource reservation period is periodic data, and data in a process corresponding to a parameter group not comprising the resource reservation period is aperiodic data; and/or
determining the multiple processes based on the remaining packet delay budgets, wherein an absolute value of a difference between the remaining packet delay budget of a first process in the multiple processes and the remaining packet delay budget of each of other processes than the first process in the multiple processes is less than or equal to a first threshold.

14. The method according to any one of claims 1 to 13, wherein the first terminal device comprises a physical layer and a medium access control layer, and the determining a target parameter group based on first information comprised in the multiple parameter groups comprises:
determining, by the medium access control layer, the target parameter group based on the first information; and
the method further comprises:
sending, by the medium access control layer, the target parameter group to the physical layer, wherein the target parameter group is used by the physical layer to obtain a candidate resource set, and the candidate resource set is used to determine the resource locations of the multiple consecutive time units.

15. The method according to claim 14, wherein the method further comprises:
sending, by the medium access control layer, target channel access priority class information corresponding to the target parameter group and/or an identifier of each of the multiple processes to the physical layer, wherein the target channel access priority class information is used by the physical layer to perform listen-before-talk LBT, and there is a correspondence between the identifier of each of the multiple processes and the target parameter group.

16. The method according to any one of claims 1 to 13, wherein the first terminal device comprises a physical layer and a medium access control layer, and the determining a target parameter group based on first information comprised in the multiple parameter groups comprises:
sending, by the medium access control layer, the multiple parameter groups to the physical layer; and
determining, by the physical layer, the target parameter group based on the first information comprised in the multiple parameter groups, wherein the target parameter group is used by the physical layer to obtain a candidate resource set, and the candidate resource set is used to determine the resource locations of the multiple consecutive time units.

17. The method according to claim 16, wherein the method further comprises:
sending, by the medium access control layer, channel access priority class information corresponding to each of the multiple processes and/or an identifier of each of the multiple processes to the physical layer, wherein the channel access priority class information corresponding to each of the multiple processes is used to determine target channel access priority class information corresponding to the target parameter group, the target channel access priority class information is used by the physical layer to perform listen-before-talk LBT, and there is a correspondence between the identifier of each of the multiple processes and the target parameter group.

18. The method according to claim 15 or 17, wherein the target channel access priority class information comprises channel access priority class information corresponding to a process with a highest channel access priority class in the multiple processes or channel access priority class information corresponding to a process with a lowest channel access priority class in the multiple processes.

19. The method according to any one of claims 1 to 18, wherein the method further comprises:
obtaining the candidate resource set based on the target parameter group, wherein the candidate resource set comprises an available resource used by the first terminal device to transmit the data in the multiple processes; and
determining the resource locations of the multiple consecutive time units based on the candidate resource set.

20. The method according to claim 19, wherein the determining the resource locations of the multiple consecutive time units based on the candidate resource set comprises:
determining the resource locations of the multiple consecutive time units based on a reserved resource location and the candidate resource set, wherein the reserved resource location is used to transmit data of a terminal device other than the first terminal device and/or a sidelink synchronization signal block corresponding to the first terminal device,
a part of the multiple consecutive time units are used to transmit the data in the multiple processes, and a rest of the multiple consecutive time units are used to transmit the data of the terminal device other than the first terminal device and/or the sidelink synchronization signal block corresponding to the first terminal device.

21. The method according to claim 20, wherein the first terminal device comprises the physical layer and the medium access control layer, and the determining the resource locations of the multiple consecutive time units based on a reserved resource location and the candidate resource set comprises:
sending, by the physical layer, the reserved resource location and the candidate resource set to the medium access control layer; and
determining, by the medium access control layer, the resource locations of the multiple consecutive time units based on the reserved resource location and the candidate resource set.

22. The method according to claim 20, wherein the first terminal device comprises the physical layer and the medium access control layer, and the determining the resource locations of the multiple consecutive time units based on a reserved resource location and the candidate resource set comprises:
determining, by the physical layer, the resource locations of the multiple consecutive time units based on the reserved resource location and the candidate resource set; and
sending, by the physical layer, the reserved resource location and the resource locations of the multiple consecutive time units to the medium access control layer, or sending first indication information to the medium access control layer, wherein the first indication information indicates a resource location of a time unit occupied by the medium access control layer to transmit the data in the multiple processes.

23. The method according to claim 22, wherein the method further comprises:
sending, by the physical layer, second indication information to the medium access control layer, wherein the second indication information indicates a correspondence between the multiple processes and the time unit used to transmit the data in the multiple processes in the multiple consecutive time units.

24. The method according to any one of claims 21 to 23, wherein the method further comprises:
sending, by the physical layer, channel access priority class information corresponding to the reserved resource location to the medium access control layer, wherein a channel access priority class corresponding to each of the multiple processes is not lower than a channel access priority class corresponding to the reserved resource location.

25. The method according to claim 19, wherein the first terminal device comprises the physical layer and the medium access control layer, and the determining the resource locations of the multiple consecutive time units based on the candidate resource set comprises:
determining, by the physical layer, the resource locations of the multiple consecutive time units based on the candidate resource set, wherein the multiple consecutive time units are used for initial transmission and/or retransmission of the data in the multiple processes; and
sending, by the physical layer, the resource locations of the multiple consecutive time units and at least one of the identifier of each of the multiple processes and third indication information to the medium access control layer, wherein the third indication information indicates a correspondence between the multiple consecutive time units and the data in the multiple processes.

26. A communication apparatus, comprising:
a transceiver unit, configured to determine to transmit data in multiple processes to a second terminal device in multiple consecutive time units of an unlicensed spectrum, wherein the second terminal device communicates with the apparatus through a sidelink, and the multiple processes are in one-to-one correspondence with multiple parameter groups; and
a processing unit, configured to determine a target parameter group based on first information comprised in the multiple parameter groups, wherein the target parameter group is used to determine resource locations of the multiple consecutive time units, and the first information comprises one or more of a priority, a quantity of subchannels, a remaining packet delay budget, and a resource reservation period.

27. The apparatus according to claim 26, wherein
the processing unit is specifically configured to determine the target parameter group based on a first parameter in the first information, wherein the first parameter is one of the priority, the quantity of subchannels, the remaining packet delay budget, and the resource reservation period.

28. The apparatus according to claim 27, wherein
the processing unit is specifically configured to determine, based on a value of the first parameter, that a first parameter group in the multiple parameter groups is the target parameter group, wherein a value of the first parameter in the first parameter group is greater than or less than a value of the first parameter in a parameter group other than the first parameter group in the multiple parameter groups, or is closest to an average value of the first parameters in the multiple parameter groups.

29. The apparatus according to claim 28, wherein a part of the multiple parameter groups comprise the first parameter, and the first parameter is the resource reservation period.

30. The apparatus according to claim 27, wherein
the processing unit is specifically configured to determine the target parameter group based on the first parameter and a second parameter in the first information, wherein the second parameter is one of the priority, the quantity of subchannels, the remaining packet delay budget, and the resource reservation period, and the first parameter is different from the second parameter.

31. The apparatus according to claim 30, wherein
the processing unit is specifically configured to determine multiple candidate parameter groups from the multiple parameter groups based on the first parameter; and
the processing unit is further configured to select the target parameter group from the multiple candidate parameter groups based on the second parameter, wherein
a value of the first parameter in each of the multiple candidate parameter groups is greater than or less than a value of the first parameter in a parameter group other than the multiple candidate parameter groups in the multiple parameter groups, or is closest to an average value of the first parameters in the multiple parameter groups; and
a value of the second parameter in the target parameter group is greater than or less than a value of the second parameter in a parameter group other than the target parameter group in the multiple candidate parameter groups, or is closest to an average value of the second parameters in the multiple candidate parameter groups.

32. The apparatus according to any one of claims 28, 30, and 31, wherein types of parameters comprised in any two of the multiple parameter groups are the same.

33. The apparatus according to claim 30 or 31, wherein the first parameter or the second parameter is the resource reservation period; or the first parameter is one of the priority and the remaining packet delay budget, and the second parameter is the other one of the priority and the remaining packet delay budget.

34. The apparatus according to claim 30, wherein each of the multiple parameter groups comprises the first parameter, and a part of the multiple parameter groups comprise the second parameter;
the processing unit is specifically configured to determine a first parameter group from the multiple parameter groups based on the first parameter, wherein a value of the first parameter in the first parameter group is greater than or less than a value of the first parameter in a parameter group other than the first parameter group in the multiple parameter groups, or is closest to an average value of the first parameters in the multiple parameter groups, and the first parameter group does not comprise the second parameter;
the processing unit is further configured to determine a target second parameter from the part of parameter groups based on the second parameter, wherein a value of the target second parameter is a largest value or a smallest value in the second parameters comprised in the part of parameter groups or an average value of the second parameters comprised in the part of parameter groups, or a value of the target second parameter is closest to an average value of the second parameters comprised in the part of parameter groups; and
the processing unit is further configured to determine the target parameter group based on the first parameter group and the target second parameter, wherein the target parameter group comprises all parameters comprised in the second parameter group, values corresponding to all the parameters, the target second parameter, and the value corresponding to the target second parameter.

35. The apparatus according to claim 34, wherein the first parameter is one of the priority, the quantity of subchannels, and the remaining packet delay budget, and the second parameter is the resource reservation period.

36. The apparatus according to claim 27, wherein the target parameter group comprises the first parameter; and
the processing unit is specifically configured to determine a value of the first parameter in the target parameter group based on values of the first parameters in the multiple parameter groups.

37. The apparatus according to claim 36, wherein the value of the first parameter in the target parameter group is a value of the first parameter in a first parameter group in the multiple parameter groups, and the value of the first parameter in the first parameter group is a largest value or a smallest value in the first parameters in the multiple parameter groups, or is closest to an average value of the first parameters in a part or all of the multiple parameter groups; or
the value of the first parameter in the target parameter group is an average value of the first parameters in one or more of the multiple parameter groups.

38. The apparatus according to any one of claims 26 to 37, wherein
the processing unit is further configured to determine the multiple processes based on the resource reservation period, wherein data in a process corresponding to a parameter group comprising the resource reservation period is periodic data, and data in a process corresponding to a parameter group not comprising the resource reservation period is aperiodic data; and/or
the processing unit is further configured to determine the multiple processes based on the remaining packet delay budgets, wherein an absolute value of a difference between the remaining packet delay budget of a first process in the multiple processes and the remaining packet delay budget of each of other processes than the first process in the multiple processes is less than or equal to a first threshold.

39. The apparatus according to any one of claims 26 to 38, wherein the apparatus comprises a physical layer and a medium access control layer, wherein
the medium access control layer is configured to determine the target parameter group based on the first information; and
the medium access control layer is further configured to send the target parameter group to the physical layer, wherein the target parameter group is used by the physical layer to obtain a candidate resource set, and the candidate resource set is used to determine the resource locations of the multiple consecutive time units.

40. The apparatus according to claim 39, wherein
the medium access control layer is further configured to send target channel access priority class information corresponding to the target parameter group and/or an identifier of each of the multiple processes to the physical layer, wherein the target channel access priority class information is used by the physical layer to perform listen-before-talk LBT, and there is a correspondence between the identifier of each of the multiple processes and the target parameter group.

41. The apparatus according to any one of claims 26 to 38, wherein the apparatus comprises a physical layer and a medium access control layer, wherein
the medium access control layer is configured to send the multiple parameter groups to the physical layer; and
the physical layer is configured to determine the target parameter group based on the first information comprised in the multiple parameter groups, wherein the target parameter group is used by the physical layer to obtain a candidate resource set, and the candidate resource set is used to determine the resource locations of the multiple consecutive time units.

42. The apparatus according to claim 41, wherein
the medium access control layer is further configured to send channel access priority class information corresponding to each of the multiple processes and/or an identifier of each of the multiple processes to the physical layer, wherein the channel access priority class information corresponding to each of the multiple processes is used to determine target channel access priority class information corresponding to the target parameter group, the target channel access priority class information is used by the physical layer to perform listen-before-talk LBT, and there is a correspondence between the identifier of each of the multiple processes and the target parameter group.

43. The apparatus according to claim 40 or 42, wherein the target channel access priority class information comprises channel access priority class information corresponding to a process with a highest channel access priority class in the multiple processes or channel access priority class information corresponding to a process with a lowest channel access priority class in the multiple processes.

44. The apparatus according to any one of claims 26 to 43, wherein
the processing unit is further configured to obtain the candidate resource set based on the target parameter group, wherein the candidate resource set comprises an available resource used by the apparatus to transmit the data in the multiple processes; and
the processing unit is further configured to determine the resource locations of the multiple consecutive time units based on the candidate resource set.

45. The apparatus according to claim 44, wherein
the processing unit is specifically configured to determine the resource locations of the multiple consecutive time units based on a reserved resource location and the candidate resource set, wherein the reserved resource location is used to transmit data of a terminal device other than the apparatus and/or a sidelink synchronization signal block corresponding to the apparatus,
a part of the multiple consecutive time units are used to transmit the data in the multiple processes, and a rest of the multiple consecutive time units are used to transmit the data of the terminal device other than the apparatus and/or the sidelink synchronization signal block corresponding to the apparatus.

46. The apparatus according to claim 45, wherein the apparatus comprises the physical layer and the medium access control layer, wherein
the physical layer is configured to send the reserved resource location and the candidate resource set to the medium access control layer; and
the medium access control layer is configured to determine the resource locations of the multiple consecutive time units based on the reserved resource location and the candidate resource set.

47. The apparatus according to claim 45, wherein the apparatus comprises the physical layer and the medium access control layer, wherein
the physical layer is configured to determine the resource locations of the multiple consecutive time units based on the reserved resource location and the candidate resource set; and
the physical layer is further configured to send the reserved resource location and the resource locations of the multiple consecutive time units to the medium access control layer, or send first indication information to the medium access control layer, wherein the first indication information indicates a resource location of a time unit occupied by the medium access control layer to transmit the data in the multiple processes.

48. The apparatus according to claim 47, wherein
the physical layer is configured to send second indication information to the medium access control layer, wherein the second indication information indicates a correspondence between the multiple processes and the time unit used to transmit the data in the multiple processes in the multiple consecutive time units.

49. The apparatus according to any one of claims 46 to 48, wherein
the physical layer is further configured to send channel access priority class information corresponding to the reserved resource location to the medium access control layer, wherein a channel access priority class corresponding to each of the multiple processes is not lower than a channel access priority class corresponding to the reserved resource location.

50. The apparatus according to claim 44, wherein the apparatus comprises the physical layer and the medium access control layer, wherein
the physical layer is configured to determine the resource locations of the multiple consecutive time units based on the candidate resource set, wherein the multiple consecutive time units are used for initial transmission and/or retransmission of the data in the multiple processes; and
the physical layer is further configured to send the resource locations of the multiple consecutive time units and at least one of the identifier of each of the multiple processes and third indication information to the medium access control layer, wherein the third indication information indicates a correspondence between the multiple consecutive time units and the data in the multiple processes.

51. A communication apparatus, comprising a processor and a memory, wherein the processor is coupled to the memory, the memory is configured to store a computer program, and when the processor runs the computer program, the communication apparatus is enabled to perform the method according to any one of claims 1 to 25.

52. A chip, wherein the chip is installed in a terminal device, the chip comprises a processor and a communication interface, and when the processor reads instructions through the communication interface and runs the instructions, the terminal device is enabled to perform the method according to any one of claims 1 to 25.

53. A computer-readable storage medium, wherein the computer-readable storage medium stores computer instructions, and when the computer instructions are run on a computer, the computer is enabled to perform the method according to any one of claims 1 to 25.

54. A computer program product, wherein the computer program product comprises a computer program or instructions used to perform the method according to any one of claims 1 to 25.

55. A communication system, comprising a first terminal device and a second terminal device, wherein the first terminal device communicates with the second terminal device through a sidelink, the first terminal device is configured to perform the method according to any one of claims 1 to 25, and the second terminal device is configured to receive, on an unlicensed spectrum, data sent by the first terminal device.
